(19) Europäisches Patentamt
European Patent Office
Office européen des brevets

(11) **EP 4 694 302 A1**

(12) **EUROPEAN PATENT APPLICATION**
published in accordance with Art. 153(4) EPC

(43) Date of publication:
**11.02.2026 Bulletin 2026/07**

(21) Application number: **24784173.7**

(22) Date of filing: **29.03.2024**

(51) International Patent Classification (IPC):
*H04W 24/10* (2009.01)

(52) Cooperative Patent Classification (CPC):
**H04B 17/309; H04L 5/00; H04W 24/10**

(86) International application number:
**PCT/CN2024/084631**

(87) International publication number:
**WO 2024/208088 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310367790**

(71) Applicant: **Datang Mobile Communications
Equipment Co., Ltd.
Beijing 100085 (CN)**

(72) Inventors:
• ZHAO, Yue
  **Beijing 100085 (CN)**
• SI, Qianqian
  **Beijing 100085 (CN)**
• GAO, Xuejuan
  **Beijing 100085 (CN)**

(74) Representative: **Studio Torta S.p.A.
Via Viotti, 9
10121 Torino (IT)**

(54) **INFORMATION PROCESSING METHOD AND APPARATUS, AND READABLE STORAGE MEDIUM**

(57) The present disclosure relates to the technical field of communications, and provides an information processing method and apparatus, and a readable storage medium. The method comprises: determining one or more pieces of information of a first CSI report: a priority value; report content; and a time delay calculation requirement, wherein the first CSI report carries measurement information of L1-CLI.

> determining one or more of following information of a first CSI report: a priority value; report content; a calculation delay requirement
>
> — 101

**FIG.1**

**Description**

**CROSS-REFERENCE TO RELATED APPLICATION**

The present disclosure claims priority to Chinese patent application No. 202310367790.6, filed on April 7, 2023 before CNIPA, entitled "Information Processing Method, Apparatus, and Readable Storage Medium", the entire contents of which are incorporated herein by reference.

**TECHNICAL FIELD**

The present disclosure relates to the field of communication technologies, and in particular, to an information processing method and apparatus, and a readable storage medium.

**BACKGROUND**

In the related art, a measurement standard measured by a layer 1 (L1)-Cross-link interference (CLI) may be a Received Signal Strength Indicator (RSSI), or may be a Reference Signal Received Power (RSRP), that is, for L1-CLI measurement, a User Equipment (UE) may report an RSSI value on a L1-CLI measurement resource, and/or report an RSRP value on the L1-CLI measurement resource.

However, there is no specific implementation method for L1-CLI reporting in the related art.

**SUMMARY**

Embodiments of the present disclosure provide an information processing method and apparatus, and a readable storage medium, to determine a specific implementation solution for L1-CSI reporting.

According to a first aspect, an embodiment of the present disclosure provides an information processing method, applied to a terminal. The method includes: determining one or more of following pieces of information of a first Channel State Information (CSI) report: a priority value; report content; a calculation delay requirement; wherein the first CSI report carries measurement information of Layer 1 Cross-Link Interference (L1-CLI).

In some embodiments, a priority value of the first CSI report is less than a priority value of the second CSI report; or a priority value of the first CSI report is less than a priority value of the third CSI report and greater than a priority value of the second CSI report; wherein the second CSI report carries Layer-1 Reference Signal Received Power (L1-RSRP) or Layer-1 Signal to Noise and Interference Ratio (L1-SINR), and the third CSI report does not carry the measurement information of L1-CLI, L1-RSRP, or L1-SINR.

In some embodiments, determining the priority value of the first CSI report includes: determining the priority value according to L1-CLI configuration information of a network device; or determining the priority value according to L1-CLI measurement capability reported by the terminal.

In some embodiments, determining the priority value according to the L1-CLI configuration information of the network device includes: if the L1-CLI configuration information configured by the network device through Downlink Control Information (DCI) is received, or the L1-CLI configuration information configured by the network device through higher-layer signaling is obtained, determining the priority value according to a first formula; wherein the first formula is expressed as:

$$\mathrm{Pri}_{\mathrm{iCSI}}(y, k, c, s) = 3 \cdot \mathrm{N}_{\mathrm{cells}} \cdot \mathrm{M}_{s} \cdot y + \mathrm{N}_{\mathrm{cells}} \cdot \mathrm{M}_{s} \cdot k + \mathrm{M}_{s} \cdot c + s;$$

wherein, $\mathrm{Pri}_{\mathrm{iCSI}}(y, k, c, s)$ represents a priority value; c represents a serving cell index; s represents a report configuration ID (reportConfigID); $\mathrm{N}_{\mathrm{cells}}$ represents a value of a higher-layer configuration parameter maxNrofServingCells; $\mathrm{M}_s$ represents a value of a higher-layer parameter maxNrofCSI-ReportConfigurations; *k* and *y* respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, determining the priority value according to the L1-CLI measurement capability reported by the terminal includes: if the terminal reports support for L1-CLI measurement, determining the priority value according to a first formula; wherein the first formula is expressed as: $\mathrm{Pri}_{\mathrm{iCSI}}(y, k, c, s) = 3 \cdot \mathrm{N}_{\mathrm{cells}} \cdot \mathrm{M}_{s} \cdot y + \mathrm{N}_{\mathrm{cells}} \cdot \mathrm{M}_{s} \cdot k + \mathrm{M}_{s} \cdot c + s;$ wherein, $\mathrm{Pri}_{\mathrm{iCSI}}(y, k, c, s)$ represents a priority value; c represents a serving cell index; s represents a report configuration ID (reportConfigID); $\mathrm{N}_{\mathrm{cells}}$ represents a value of a higher-layer configuration parameter maxNrofServingCells; $\mathrm{M}_s$ represents a value of a higher-layer parameter maxNrofCSI-ReportConfigurations; *k, y* respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, determining the report content of the first CSI report includes one or more of the following: determining the report content according to a type of L1-CLI measurement information included in the first CSI report; or determining the report content according to a protocol specification.

In some embodiments, determining the report content according to the type of L1-CLI measurement information included in the first CSI report includes: if the L1-CLI measurement information carried in the first CSI report is a Received Signal Strength Indicator (RSSI), reporting N1 measurement resources with smallest interference and measurement results on the N1 measurement resources; or reporting a first measurement resource among the N1 measurement resources with the smallest interference, the first measurement result on the first measurement resource, and difference between the second measurement result and the first measurement result, wherein the first measurement result on the first measurement resource is a minimum value among the measurement results on the N1 measurement resources, and the second measurement result is a measurement result, excluding the first measurement result, among the measurement results on the N1 measurement resources; or if the L1-CLI measurement information carried in the first CSI report is an RSSI, reporting N2 measurement resources and measurement results on the N2 measurement resources; or reporting the first measurement resource among the N2 measurement resources, the first measurement result on the first measurement resource, and difference between the second measurement result and the first measurement result, wherein the first measurement result on the first measurement resource is a minimum value among the measurement results on the N2 measurement resources, and the second measurement result is a measurement result, excluding the first measurement result, among the measurement results on the N2 measurement resources; or if the L1-CLI measurement information carried in the first CSI report is Reference Signal Received Power (RSRP), reporting N3 measurement resources with largest interference and measurement results on the N3 measurement resources; or reporting a third measurement resource among the N3 measurement resources with the largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result, excluding the third measurement result, among the measurement results on the N3 measurement resources; or if the L1-CLI measurement information carried in the first CSI report is Reference Signal Received Power (RSRP), reporting N4 measurement resources and measurement results on the N4 measurement resources; or reporting a third measurement resource among the N4 measurement resources, a third measurement result on the third measurement resource, and difference between the fourth measurement result and the third measurement result, wherein the third measurement result on the third measurement resource is a maximum value among the measurement results on the N4 measurement resources, and the fourth measurement result is a measurement result, excluding the third measurement result, among the measurement results on the N4 measurement resources; wherein, N1, N2, N3, or N4 is an integer greater than 0.

In some embodiments, determining the report content according to the protocol specification includes: reporting N5 measurement resources with a smallest interference and measurement results on the N5 measurement resources; or reporting a first measurement resource among the N5 measurement resources with smallest interference, a first measurement result on the first measurement resource, and difference between a second measurement result and the first measurement result, wherein the first measurement result on the first measurement resource is a minimum value among the measurement results on the N5 measurement resources, and the second measurement result is a measurement result, excluding the first measurement result, among the measurement results on the N5 measurement resources; or reporting N6 measurement resources and measurement results on the N6 measurement resources; or reporting a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result, excluding the first measurement result, among the measurement results on the N6 measurement resources; or reporting N7 measurement resources with largest interference and measurement results on the N7 measurement resources; or reporting a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources; or reporting N8 measurement resources and measurement results on the N8 measurement resources; or reporting a third measurement resource among the N8 measurement resources, a third measurement result on the third measurement resource, and difference between the fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources; wherein, N5, N6, N7, or N8 is an integer greater than 0.

In some embodiments, determining the calculation delay includes: if the first CSI report carries L1-CLI measurement information as an RSSI, determining a first calculation delay predefined based on each Subcarrier Spacing (SCS); or if the first CSI report carries L1-CLI measurement information as an RSSI, determining the first calculation delay according to the CLI reporting capability of the terminal; wherein, the first calculation delay is less than or equal to a calculation delay corresponding to L1-RSRP.

In some embodiments, the first calculation delay includes a third calculation delay and a fourth calculation delay; determining the first calculation delay predefined based on each Subcarrier Spacing (SCS) includes: determining a third calculation delay and a fourth calculation delay predefined based on each SCS; wherein, different SCSs have corresponding third calculation delay and fourth calculation delay respectively; the third calculation delay is a constant, or the third calculation delay is determined based on the fourth calculation delay, or the third calculation delay is determined based on the fourth calculation delay and the beam switch timing capability (beamSwitchTiming) reported by the terminal; the fourth calculation delay is a constant.

In some embodiments, the first calculation delay includes a third calculation delay and a fourth calculation delay; determining the first calculation delay according to the CLI reporting capability of the terminal includes: determining the fourth calculation delay according to the CLI reporting capability corresponding to each SCS; and determining the third calculation delay based on the fourth calculation delay.

In some embodiments, determining the calculation delay includes: if the L1-CLI measurement information carried in the first CSI report is RSRP: determining a predefined second calculation delay; or if the L1-CLI measurement information carried in the first CSI report is RSRP: determining the second calculation delay according to the beam report timing capability (beamReportTiming) reported by the terminal; wherein, the second calculation delay is less than or equal to the calculation delay corresponding to L1-RSRP.

In some embodiments, the second calculation delay includes a fifth calculation delay and a sixth calculation delay; determining a predefined second calculation delay includes: determining a fifth calculation delay and a sixth calculation delay corresponding to each predefined SCS; wherein, the fifth calculation delay is a constant, or the fifth calculation delay is determined based on the sixth calculation delay; the sixth calculation delay is a constant.

In some embodiments, the second calculation delay includes a fifth calculation delay and a sixth calculation delay; determining the second calculation delay based on the beamReportTiming reported by the terminal includes: when $\mu = 0$ or $\mu = 1$, the fifth calculation delay is a constant; or when $\mu = 2$ or $\mu = 3$ or $\mu = 5$ or $\mu = 6$, determining the fifth calculation delay according to the beamReportTiming reported by the terminal; and determining the sixth calculation delay according to the beamReportTiming reported by the terminal; wherein, $\mu$ represents Subcarrier Spacing (SCS).

In some embodiments, determining the fifth calculation delay according to the beamReportTiming reported by the terminal includes: determining the fifth calculation delay based on the beamReportTiming and the first capability reported by the terminal; wherein, the first capability is used to indicate a time interval between a moment when the terminal receives a DCI for triggering aperiodic L1-CLI reporting and a sending moment of an aperiodic reference signal.

In a second aspect, an embodiment of the present disclosure provides an information processing method applied to a network device. The method includes: determining information of a first CSI report, where the first CSI report carries measurement information of L1-CLI; processing according to the information; the information includes one or more of following pieces of information: a priority value; report content; a calculation delay requirement.

In some embodiments, a priority value of the first CSI report is less than a priority value of the second CSI report; or a priority value of the first CSI report is less than a priority value of the third CSI report and greater than a priority value of the second CSI report; wherein the second CSI report carries L1-RSRP or L1-SINR, and the third CSI report does not carry the measurement information of L1-CLI, L1-RSRP, or L1-SINR.

In some embodiments, determining the priority value of the first CSI report includes: determining the priority value according to L1-CLI configuration information of the terminal; or determining the priority value according to the L1-CLI measurement capability reported by the terminal.

In some embodiments, determining the priority value according to L1-CLI configuration information of the terminal includes: if the L1-CLI configuration information is sent to the terminal via a DCI or the L1-CLI configuration information is configured for the terminal via higher-layer signaling, determining the priority value according to a first formula; wherein the first formula is expressed as:

$$\mathrm{Pri}_{iCSI}(y, k, c, s) = 3 \cdot N_{cells} \cdot M_s \cdot y + N_{cells} \cdot M_s \cdot k + M_s \cdot c + s;$$

wherein, $\mathrm{Pri}_{iCSI}(y, k, c, s)$ represents a priority value; c represents a serving cell index; s represents a report configuration ID (reportConfigID); $N_{cells}$ represents a value of a higher-layer configuration parameter maxNrofServingCells; $M_s$ represents

a value of a higher-layer parameter maxNrofCSI-ReportConfigurations; k and y respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, determining the priority value according to the L1-CLI measurement capability reported by the terminal includes: if the terminal reports support for L1-CLI measurement, determining the priority value according to a first formula; wherein the first formula is expressed as: $Pri_{iCSI}(y, k, c, s) = 3 \cdot N_{cells} \cdot M_s \cdot y + N_{cells} \cdot M_s \cdot k + M_s \cdot c + s$; wherein, $Pri_{iCSI}(y, k, c, s)$ represents a priority value; c represents a serving cell index; s represents a report configuration ID (reportConfigID); $N_{cells}$ represents a value of a higher-layer configuration parameter maxNrofServingCells; $M_s$ represents a value of a higher-layer parameter maxNrofCSI-ReportConfigurations; *k, y* respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, determining the report content of the first CSI includes one or more of the following: determining the report content according to a type of L1-CLI measurement information included in the first CSI report; or determining the report content according to a protocol specification.

In some embodiments, determining the report content according to the type of L1-CLI measurement information included in the first CSI report includes: if the L1-CLI measurement information carried in the first CSI report is an RSSI, determining the report content to be N1 measurement resources with smallest interference and measurement results on the N1 measurement resources; or a first measurement resource among the N1 measurement resources with smallest interference, a first measurement result on the first measurement resource, and difference between the second measurement result and the first measurement result, wherein the first measurement result on the first measurement resource is a minimum value among the measurement results on the N1 measurement resources, and the second measurement result is a measurement result excluding the first measurement result among the measurement results on the N1 measurement resources; or N2 measurement resources and measurement results on the N2 measurement resources; or a first measurement resource among the N2 measurement resources, a first measurement result on the first measurement resource, and difference between the second measurement result and the first measurement result, wherein the first measurement result on the first measurement resource is a minimum value among the measurement results on the N2 measurement resources, and the second measurement result is a measurement result excluding the first measurement result among the measurement results on the N2 measurement resources; or if the L1-CLI measurement information carried in the first CSI report is RSRP: determining the report content to be: N3 measurement resources with largest interference and measurement results on the N3 measurement resources; or a third measurement resource among the N3 measurement resources with largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result excluding the third measurement result among the measurement results on the N3 measurement resources; or N4 measurement resources and measurement results on the N4 measurement resources; or a third measurement resource among the N4 measurement resources, a third measurement result on the third measurement resource, and difference between the fourth measurement result and the third measurement result, wherein the third measurement result on the third measurement resource is a maximum value among measurement results on the N4 measurement resources, and the fourth measurement result is a measurement result excluding the third measurement result among the measurement results on the N4 measurement resources; wherein, N1, N2, N3, or N4 is an integer greater than 0.

In some embodiments, determining the report content according to the protocol specification includes one or more of the following: determining the report content to be: N5 measurement resources with smallest interference and measurement results on the N5 measurement resources; or a first measurement resource among the N5 measurement resources with smallest interference, a first measurement result on the first measurement resource, and difference between the second measurement result and the first measurement result, wherein the first measurement result on the first measurement resource is a minimum value among the measurement results on the N5 measurement resources, and the second measurement result is a measurement result excluding the first measurement result among the measurement results on the N5 measurement resources; or determining the report content to be: N6 measurement resources and measurement results on the N6 measurement resources; or a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result excluding the first measurement result among the measurement results on the N6 measurement resources; or determining the report content to be: N7 measurement resources with largest interference and measurement results on the N7 measurement resources; or a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources); or determining the report content to be: N8 measurement resources and measurement results on the N8 measurement resources; or a third measurement resource among the N8 measurement resources, a third measurement result on the third measurement resource, and difference between a fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources; wherein, N5, N6, N7, or N8 is an integer greater than 0.

In some embodiments, determining the calculation delay includes: if the first CSI report carries L1-CLI measurement information as an RSSI: determining a first calculation delay predefined based on each SCS; or if the first CSI report carries L1-CLI measurement information as an RSSI: determining the first calculation delay according to the CLI reporting capability of the terminal; wherein, the first calculation delay is less than or equal to the calculation delay corresponding to L1-RSRP.

In some embodiments, the first calculation delay includes a third calculation delay and a fourth calculation delay; determining the first calculation delay predefined based on each Subcarrier Spacing (SCS) includes: determining a third calculation delay and a fourth calculation delay predefined based on each SCS; wherein, different SCSs have corresponding third calculation delay and fourth calculation delay respectively; the third calculation delay is a constant, or the third calculation delay is determined based on the fourth calculation delay, or the third calculation delay is determined based on the fourth calculation delay and the beamSwitchTiming reported by the terminal; the fourth calculation delay is a constant.

In some embodiments, the first calculation delay includes a third calculation delay and a fourth calculation delay; determining the first calculation delay based on the CLI reporting capability of the terminal includes: determining the fourth calculation delay according to the CLI reporting capability corresponding to each SCS; and determining the third calculation delay based on the fourth calculation delay.

In some embodiments, determining the calculation delay includes: if the L1-CLI measurement information carried in the first CSI report is RSRP: determining a predefined second calculation delay; or if the L1-CLI measurement information carried in the first CSI report is RSRP: determining the second calculation delay according to the beamReportTiming reported by the terminal; wherein, the second calculation delay is less than or equal to the calculation delay corresponding to L1-RSRP.

In some embodiments, the second calculation delay includes a fifth calculation delay and a sixth calculation delay; determining the predefined second calculation delay includes: determining a fifth calculation delay and a sixth calculation delay corresponding to each predefined SCS; wherein, the fifth calculation delay is a constant, or the fifth calculation delay is determined based on the sixth calculation delay; the sixth calculation delay is a constant.

In some embodiments, the second calculation delay includes a fifth calculation delay and a sixth calculation delay; determining the second calculation delay based on the beamReportTiming reported by the terminal includes: when $\mu = 0$ or $\mu = 1$, the fifth calculation delay is a constant; or when $\mu = 2$ or $\mu = 3$ or $\mu = 5$ or $\mu = 6$, determining the fifth calculation delay according to the beamReportTiming reported by the terminal; and determining the sixth calculation delay according to the beamReportTiming reported by the terminal; wherein, $\mu$ represents Subcarrier Spacing (SCS).

In some embodiments, determining the fifth calculation delay according to the beamReportTiming reported by the terminal includes: determining the fifth calculation delay based on the beamReportTiming and the first capability reported by the terminal; wherein, the first capability is used to indicate a time interval between a moment when the terminal receives the DCI for triggering aperiodic L1-CLI reporting and a sending moment of an aperiodic reference signal.

In a third aspect, an embodiment of the present disclosure provides an information processing apparatus, applied to a termina. The apparatus includes: a memory, a transceiver, and a processor; wherein the memory is used to store a computer program; the transceiver is used to send and receive data under the control of the processor; the processor is used to read the computer program in the memory and perform the following operations: determining one or more of the following pieces of information of a first CSI report: a priority value; report content; a calculation delay requirement; wherein the first CSI report carries measurement information of L1-CLI.

In some embodiments, a priority value of the first CSI report is less than a priority value of the second CSI report; or a priority value of the first CSI report is less than a priority value of the third CSI report and greater than a priority value of the second CSI report; wherein the second CSI report carries L1-RSRP or L1-SINR, and the third CSI report does not carry the measurement information of L1-CLI, L1-RSRP, or L1-SINR.

In some embodiments, the processor is further used to read the computer program in the memory and perform the following operations: determining the priority value according to L1-CLI configuration information of the network device; or determining the priority value according to L1-CLI measurement capability reported by the terminal.

In some embodiments, the processor is further used to read the computer program in the memory and perform the following operations: if the L1-CLI configuration information configured by the network device through Downlink Control Information (DCI) is received, or the L1-CLI configuration information configured by the network device through higher-layer signaling is obtained, determining the priority value according to a first formula; wherein the first formula is expressed as: $Pri_{iCSI}(y, k, c, s) = 3 \cdot N_{cells} \cdot M_s \cdot y + N_{cells} \cdot M_s \cdot k + M_s \cdot c + s$; wherein, $Pri_{iCSI}(y, k, c, s)$ represents a priority value; c represents a serving cell index; s represents a report configuration ID (reportConfigID); $N_{cells}$ represents a value of a higher-layer configuration parameter maxNrofServingCells; $M_s$ represents a value of a higher-layer parameter maxNrofCSI-ReportConfigurations; $k$ and $y$ respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, the processor is further used to read the computer program in the memory and perform the following operations: if the terminal reports support for L1-CLI measurement, determining the priority value according to a first formula; wherein the first formula is expressed as: $Pri_{iCSI}(y, k, c, s) = 3 \cdot N_{cells} \cdot M_s \cdot y + N_{cells} \cdot M_s \cdot k + M_s \cdot c + s$; wherein, $Pri_{iCSI}(y, k, c, s)$ represents a priority value; c represents a serving cell index; s represents a report configuration ID (reportConfigID); $N_{cells}$ represents a value of a higher-layer configuration parameter maxNrofServingCells; $M_s$ represents a value of a higher-layer parameter maxNrofCSI-ReportConfigurations; $k, y$ respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, the processor is further used to read the computer program in the memory and perform one or more of the following operations: determining the report content according to a type of L1-CLI measurement information included in the first CSI report; or determining the report content according to a protocol specification.

In some embodiments, the processor is further used to read the computer program in the memory and perform the following operations: if the L1-CLI measurement information carried in the first CSI report is a Received Signal Strength Indicator (RSSI), reporting N1 measurement resources with smallest interference and measurement results on the N1 measurement resources; or reporting a first measurement resource among the N1 measurement resources with the smallest interference, the first measurement result on the first measurement resource, and difference between the second measurement result and the first measurement result, wherein the first measurement result on the first measurement resource is a minimum value among the measurement results on the N1 measurement resources, and the second measurement result is a measurement result, excluding the first measurement result, among the measurement results on the N1 measurement resources; or if the L1-CLI measurement information carried in the first CSI report is an RSSI, reporting N2 measurement resources and measurement results on the N2 measurement resources; or reporting the first measurement resource among the N2 measurement resources, the first measurement result on the first measurement resource, and difference between the second measurement result and the first measurement result, wherein the first measurement result on the first measurement resource is a minimum value among the measurement results on the N2 measurement resources, and the second measurement result is a measurement result, excluding the first measurement result, among the measurement results on the N2 measurement resources; or if the L1-CLI measurement information carried in the first CSI report is Reference Signal Received Power (RSRP), reporting N3 measurement resources with largest interference and measurement results on the N3 measurement resources; or reporting a third measurement resource among the N3 measurement resources with the largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result, excluding the third measurement result, among the measurement results on the N3 measurement resources; or if the L1-CLI measurement information carried in the first CSI report is Reference Signal Received Power (RSRP), reporting N4 measurement resources and measurement results on the N4 measurement resources; or reporting a third measurement resource among the N4 measurement resources, a third measurement result on the third measurement resource, and difference between the fourth measurement result and the third measurement result, wherein the third measurement result on the third measurement resource is a maximum value among the measurement results on the N4 measurement resources, and the fourth measurement result is a measurement result, excluding the third measurement result, among the measurement results on the N4 measurement resources; wherein, N1, N2, N3, or N4 is an integer greater than 0.

In some embodiments, the processor is further used to read the computer program in the memory and perform the following operations: reporting N5 measurement resources with a smallest interference and measurement results on the N5 measurement resources; or reporting a first measurement resource among the N5 measurement resources with smallest interference, a first measurement result on the first measurement resource, and difference between a second measurement result and the first measurement result, wherein the first measurement result on the first measurement resource is a minimum value among the measurement results on the N5 measurement resources, and the second measurement result is a measurement result, excluding the first measurement result, among the measurement results on the N5 measurement resources; or reporting N6 measurement resources and measurement results on the N6 measurement resources; or reporting a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result, excluding the first measurement result, among the measurement results on the N6 measurement resources; or reporting N7 measurement resources with largest interference and measurement results on the N7 measurement resources; or reporting a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources; or reporting N8 measurement resources and measurement results on the N8 measurement resources; or reporting a third measurement resource among the N8 measurement resources, a third measurement result on the third measurement resource, and difference between the fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources; wherein, N5, N6, N7, or N8 is an integer greater than 0.

In some embodiments, the processor is further used to read the computer program in the memory and perform the following operations: if the first CSI report carries L1-CLI measurement information as an RSSI, determining a first calculation delay predefined based on each Subcarrier Spacing (SCS); or if the first CSI report carries L1-CLI measurement information as an RSSI, determining the first calculation delay according to the CLI reporting capability of the terminal; wherein, the first calculation delay is less than or equal to a calculation delay corresponding to L1-RSRP.

In some embodiments, the first calculation delay includes a third calculation delay and a fourth calculation delay; and the processor is further used to read the computer program in the memory and perform the following operations: determining a third calculation delay and a fourth calculation delay predefined based on each SCS; wherein, different SCSs have corresponding third calculation delay and fourth calculation delay respectively; the third calculation delay is a constant, or the third calculation delay is determined based on the fourth calculation delay, or the third calculation delay is determined based on the fourth calculation delay and the beamSwitchTiming reported by the terminal; the fourth calculation delay is a constant.

In some embodiments, the first calculation delay includes a third calculation delay and a fourth calculation delay; the processor is further used to read the computer program in the memory and perform the following operations: determining the fourth calculation delay according to the CLI reporting capability corresponding to each SCS; and determining the third calculation delay based on the fourth calculation delay.

In some embodiments, the processor is further used to read the computer program in the memory and perform the following operations: if the L1-CLI measurement information carried in the first CSI report is RSRP: determining a predefined second calculation delay; or if the L1-CLI measurement information carried in the first CSI report is RSRP: determining the second calculation delay according to the beamReportTiming reported by the terminal; wherein, the second calculation delay is less than or equal to the calculation delay corresponding to L1-RSRP.

In some embodiments, the second calculation delay includes a fifth calculation delay and a sixth calculation delay; and the processor is further used to read the computer program in the memory and perform the following operations: determining a fifth calculation delay and a sixth calculation delay corresponding to each predefined SCS; wherein, the fifth calculation delay is a constant, or the fifth calculation delay is determined based on the sixth calculation delay; the sixth calculation delay is a constant.

In some embodiments, the second calculation delay includes a fifth calculation delay and a sixth calculation delay; and the processor is further used to read the computer program in the memory and perform the following operations: when $\mu = 0$ or $\mu = 1$, the fifth calculation delay is a constant; or when $\mu = 2$ or $\mu = 3$ or $\mu = 5$ or $\mu = 6$, determining the fifth calculation delay according to the beamReportTiming reported by the terminal; and determining the sixth calculation delay according to the beamReportTiming reported by the terminal; wherein, $\mu$ represents Subcarrier Spacing (SCS).

In some embodiments, the processor is further used to read the computer program in the memory and perform the following operations: determining the fifth calculation delay based on the beamReportTiming and the first capability reported by the terminal; wherein, the first capability is used to indicate a time interval between a moment when the terminal receives a DCI for triggering aperiodic L1-CLI reporting and a sending moment of an aperiodic reference signal.

In a fourth aspect, an embodiment of the present disclosure provides an information processing apparatus, applied to a network device. The apparatus includes a memory, a transceiver, and a processor; the memory is used to store a computer program; the transceiver is used to send and receive data under the control of the processor; the processor is used to read the computer program in the memory and perform the following operations: determining information of a first CSI report, wherein the first CSI report carries measurement information of L1-CLI; processing according to the information; the information includes one or more of following pieces of information: a priority value; report content; a calculation delay requirement.

In some embodiments, a priority value of the first CSI report is less than a priority value of the second CSI report; or a priority value of the first CSI report is less than a priority value of the third CSI report and greater than a priority value of the second CSI report; wherein the second CSI report carries L1-RSRP or L1-SINR, and the third CSI report does not carry the measurement information of L1-CLI, L1-RSRP, or L1-SINR.

In some embodiments, the processor is further used to read the computer program in the memory and perform the following operations: determining the priority value according to L1-CLI configuration information of the terminal; or determining the priority value according to the L1-CLI measurement capability reported by the terminal.

In some embodiments, the processor is further used to read the computer program in the memory and perform the following operations: if the L1-CLI configuration information is sent to the terminal via a DCI or the L1-CLI configuration information is configured for the terminal via higher-layer signaling, determining the priority value according to a first formula; wherein the first formula is expressed as:

$$\mathrm{Pri}_{\mathrm{iCSI}}(y, k, c, s) = 3 \cdot N_{\mathrm{cells}} \cdot M_s \cdot y + N_{\mathrm{cells}} \cdot M_s \cdot k + M_s \cdot c + s;$$

wherein, $\mathrm{Pri}_{\mathrm{iCSI}}(y, k, c, s)$ represents a priority value; c represents a serving cell index; s represents a report configuration ID (reportConfigID); $N_{\mathrm{cells}}$ represents a value of a higher-layer configuration parameter maxNrofServingCells; $M_s$ represents a value of a higher-layer parameter maxNrofCSI-ReportConfigurations; k and y respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, the processor is further used to read the computer program in the memory and perform the following operations: if the terminal reports support for L1-CLI measurement, determining the priority value according to a first formula; wherein the first formula is expressed as: $\mathrm{Pri}_{\mathrm{iCSI}}(y, k, c, s) = 3 \cdot N_{\mathrm{cells}} \cdot M_s \cdot y + N_{\mathrm{cells}} \cdot M_s \cdot k + M_s \cdot c + s$; wherein, $\mathrm{Pri}_{\mathrm{iCSI}}(y, k, c, s)$ represents a priority value; c represents a serving cell index; s represents a report configuration ID (reportConfigID); $N_{\mathrm{cells}}$ represents a value of a higher-layer configuration parameter maxNrofServingCells; $M_s$ represents a value of a higher-layer parameter maxNrofCSI-ReportConfigurations; k, y respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, the processor is further used to read the computer program in the memory and perform the following operations: determining the report content according to a type of L1-CLI measurement information included in the first CSI report; or determining the report content according to a protocol specification.

In some embodiments, the processor is further used to read the computer program in the memory and perform the following operations: if the L1-CLI measurement information carried in the first CSI report is an RSSI, determining the report content to be N1 measurement resources with smallest interference and measurement results on the N1 measurement resources; or a first measurement resource among the N1 measurement resources with smallest interference, a first measurement result on the first measurement resource, and difference between the second measurement result and the first measurement result, wherein the first measurement result on the first measurement resource is a minimum value among the measurement results on the N1 measurement resources, and the second measurement result is a measurement result excluding the first measurement result among the measurement results on the N1 measurement resources; or N2 measurement resources and measurement results on the N2 measurement resources; or a first measurement resource among the N2 measurement resources, a first measurement result on the first measurement resource, and difference between the second measurement result and the first measurement result, wherein the first measurement result on the first measurement resource is a minimum value among the measurement results on the N2 measurement resources, and the second measurement result is a measurement result excluding the first measurement result among the measurement results on the N2 measurement resources; or if the L1-CLI measurement information carried in the first CSI report is RSRP: determining the report content to be: N3 measurement resources with largest interference and measurement results on the N3 measurement resources; or a third measurement resource among the N3 measurement resources with largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result excluding the third measurement result among the measurement results on the N3 measurement resources; or N4 measurement resources and measurement results on the N4 measurement resources; or a third measurement resource among the N4 measurement resources, a third measurement result on the third measurement resource, and difference between the fourth measurement result and the third measurement result, wherein the third measurement result on the third measurement resource is a maximum value among measurement results on the N4 measurement resources, and the fourth measurement result is a measurement result excluding the third measurement result among the measurement results on the N4 measurement resources; wherein, N1, N2, N3, or N4 is an integer greater than 0.

In some embodiments, the processor is further used to read the computer program in the memory and perform the following operations: determining the report content to be: N5 measurement resources with smallest interference and measurement results on the N5 measurement resources; or a first measurement resource among the N5 measurement resources with smallest interference, a first measurement result on the first measurement resource, and difference between the second measurement result and the first measurement result, wherein the first measurement result on the first measurement resource is a minimum value among the measurement results on the N5 measurement resources, and the second measurement result is a measurement result excluding the first measurement result among the measurement results on the N5 measurement resources; or determining the report content to be: N6 measurement resources and measurement results on the N6 measurement resources; or a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result excluding the first measurement result among the measurement results on the N6 measurement resources; or determining the report content to be: N7 measurement resources with largest interference and measurement results on the N7 measurement resources; or a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources; or determining the report content to be: N8 measurement resources and measurement results on the N8 measurement resources; or a third measurement resource among the N8 measurement resources, a third measurement result on the third measurement resource, and difference between a fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources; wherein, N5, N6, N7, or N8 is an integer greater than 0.

In some embodiments, the processor is further used to read the computer program in the memory and perform the following operations: if the first CSI report carries L1-CLI measurement information as an RSSI: determining a first calculation delay predefined based on each SCS; or if the first CSI report carries L1-CLI measurement information as an RSSI: determining the first calculation delay according to the CLI reporting capability of the terminal; wherein, the first calculation delay is less than or equal to the calculation delay corresponding to L1-RSRP.

In some embodiments, the first calculation delay includes a third calculation delay and a fourth calculation delay; and the processor is further used to read the computer program in the memory and perform the following operations: determining a third calculation delay and a fourth calculation delay predefined based on each SCS; wherein, different SCSs have corresponding third calculation delay and fourth calculation delay respectively; the third calculation delay is a constant, or the third calculation delay is determined based on the fourth calculation delay, or the third calculation delay is determined based on the fourth calculation delay and the beamSwitchTiming reported by the terminal; the fourth calculation delay is a constant.

In some embodiments, the first calculation delay includes a third calculation delay and a fourth calculation delay; and the processor is further used to read the computer program in the memory and perform the following operations: determining the fourth calculation delay according to the CLI reporting capability corresponding to each SCS; and determining the third calculation delay based on the fourth calculation delay.

In some embodiments, the processor is further used to read the computer program in the memory and perform the following operations: if the L1-CLI measurement information carried in the first CSI report is RSRP: determining a predefined second calculation delay; or if the L1-CLI measurement information carried in the first CSI report is RSRP: determining the second calculation delay according to the beamReportTiming reported by the terminal; wherein, the second calculation delay is less than or equal to the calculation delay corresponding to L1-RSRP.

In some embodiments, the second calculation delay includes a fifth calculation delay and a sixth calculation delay; and the processor is further used to read the computer program in the memory and perform the following operations: determining a fifth calculation delay and a sixth calculation delay corresponding to each predefined SCS; wherein, the fifth calculation delay is a constant, or the fifth calculation delay is determined based on the sixth calculation delay; the sixth calculation delay is a constant.

In some embodiments, the second calculation delay includes a fifth calculation delay and a sixth calculation delay; and the processor is further used to read the computer program in the memory and perform the following operations: when $\mu = 0$ or $\mu = 1$, the fifth calculation delay is a constant; or when $\mu = 2$ or $\mu = 3$ or $\mu = 5$ or $\mu = 6$, determining the fifth calculation delay according to the beamReportTiming reported by the terminal; and determining the sixth calculation delay according to the beamReportTiming reported by the terminal; wherein, $\mu$ represents Subcarrier Spacing (SCS).

In some embodiments, the processor is further used to read the computer program in the memory and perform the following operations: determining the fifth calculation delay based on the beamReportTiming and the first capability reported by the terminal; wherein, the first capability is used to indicate a time interval between a moment when the terminal receives the DCI for triggering aperiodic L1-CLI reporting and a sending moment of an aperiodic reference signal.

In a fifth aspect, an embodiment of the present disclosure provides an information processing apparatus, applied to a terminal. The apparatus includes: a first determining unit, used to determine one or more of following pieces of information of a first Channel State Information (CSI) report: a priority value; report content; a calculation delay requirement; wherein the first CSI report carries measurement information of Layer 1 Cross-Link Interference (L1-CLI).

In a sixth aspect, an embodiment of the present disclosure provides an information processing apparatus, applied to a network device. The apparatus includes: a first determining unit, used to determine information of a first CSI report, wherein the first CSI report carries measurement information of L1-CLI; and a first processing unit, used to process according to the information; wherein, the information includes one or more of following pieces of information: a priority value; report content; a calculation delay requirement.

In a seventh aspect, an embodiment of the present disclosure provides a processor-readable storage medium, wherein the processor-readable storage medium stores a computer program, and the computer program is used to cause a processor to execute the information processing method according to the above.

In the embodiments of the present disclosure, one or more pieces of information such as the priority of the first CSI report carrying L1-CSI, the report content, and the calculation delay requirement are determined, so that a specific implementation solution for L1-CSI reporting can be determined.

## BRIEF DESCRIPTION OF THE DRAWINGS

FIG. 1 is a first flowchart of an information processing method according to an embodiment of the present disclosure;
FIG. 2 is a second flowchart of an information processing method according to an embodiment of the present disclosure;
FIG. 3 is a first structural diagram of an information processing apparatus according to an embodiment of the present disclosure;
FIG. 4 is a second structural diagram of an information processing apparatus according to an embodiment of the present disclosure;
FIG. 5 is a third structural diagram of an information processing apparatus according to an embodiment of the present disclosure;
FIG. 6 is a fourth structural diagram of an information processing apparatus according to an embodiment of the present disclosure.

## DETAILED DESCRIPTION

In the embodiments of the present disclosure, the term "and/or" describes an association relationship between associated objects, indicating that there may be three relationships. For example, "A and/or B" may indicate three scenarios: A exists alone, both A and B exist, and B exists alone. The character "/" generally indicates an "or" relationship between the associated objects.

In the embodiments of the present disclosure, the term "a plurality of" means two or more, and other quantifiers follow this rule.

The technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. All other embodiments obtained by a person of ordinary skill in the art based on the embodiments of the present disclosure without making creative efforts shall fall within the protection scope of the present disclosure.

Embodiments of the present disclosure provide an information processing method, an apparatus, and a readable storage medium, so as to resolve the problem of information reporting conflicts.

The method and the apparatus are based on the same application concept. Since the principles of the method and the apparatus for solving problems are similar, the implementation of the apparatus and the method may be referred to each other, and repeated content will not be described again.

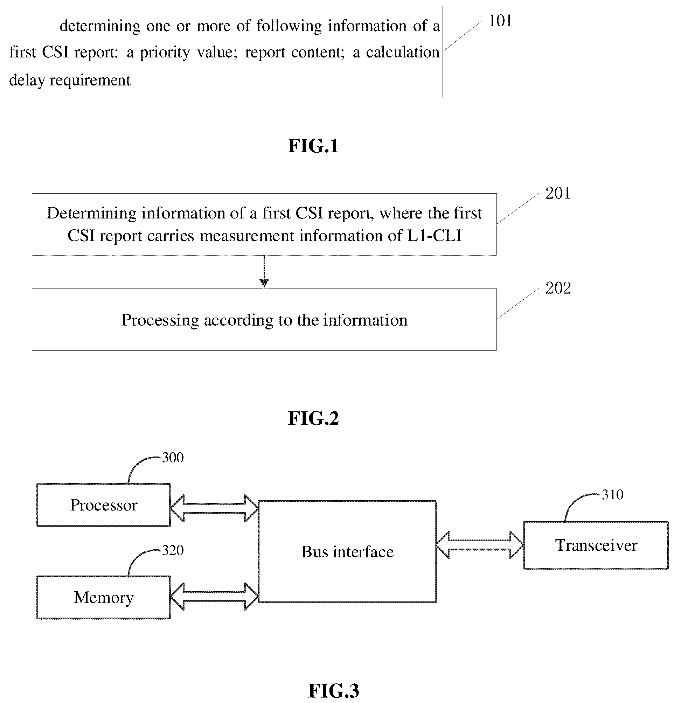

Referring to FIG. 1, FIG. 1 is a flowchart of an information processing method according to an embodiment of the present disclosure, which is applied to a terminal. As shown in FIG. 1, the method includes the following steps:
Step 101: determining one or more of the following pieces of information of a first CSI report:

a priority value;
report content;
a calculation delay requirement;
the first Channel State Information (CSI) report carries measurement information of L1-CLI. The measurement information of L1-CLI may include an RSSI value on an RSSI measurement resource and/or an RSRP value on an RSRP measurement resource.

The specific implementation manners for determining the above information are described separately below.

I. Determine the priority of the first CSI report

By determining the priority of the first CSI report, the first CSI report can be distinguished from other CSI reports in terms of priority. In this way, when a reporting conflict occurs, a CSI report with higher priority is sent.
In the embodiments of the present disclosure, the priority may be represented by a priority value. A higher priority value indicates a lower priority, and vice versa.
Specifically, the priority value of the first CSI report is less than the priority value of a second CSI report; or the priority value of the first CSI report is less than the priority value of a third CSI report and greater than the priority value of the second CSI report. wherein, the second CSI report carries L1-RSRP or L1-Signal to Noise and Interference Ratio (SINR), and the L1-RSRP and L1-SINR are the measurement and reporting content of a beam; the third CSI report does not carry the measurement information of L1-CLI, L1-RSRP, or L1-SINR.
When determining the priority value of the first CSI report, the priority value may be determined in at least the following two manners:
Manner 1: determining the priority value based on L1-CLI configuration information of a network device.
Specifically, if the terminal receives L1-CLI configuration information configured by the network device through DCI, or obtains L1-CLI configuration information configured by the network device through high-layer signaling, the priority value is determined according to the first formula (1);

the first formula is expressed as:

$$\mathrm{Pri}_{iCSI}(y, k, c, s) = 3 \cdot N_{cells} \cdot M_s \cdot y + N_{cells} \cdot M_s \cdot k + M_s \cdot c + s; \ (1)$$

wherein, $\mathrm{Pri}_{iCSI}(y, k, c, s)$ represents a priority value; c represents a serving cell index; s represents a report configuration ID (reportConfigID); $N_{cells}$ represents a value of a higher-layer configuration parameter maxNrofServingCells; $M_s$ represents a value of a higher-layer parameter maxNrofCSI-ReportConfigurations; $k$, $y$ respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

For the parameter y, its value may be determined in the following way: for an aperiodic CSI report carried by a Physical Uplink Shared Channel (PUSCH), y=0; for a semi-persistent CSI report carried by the PUSCH, y=1; for a semi-persistent CSI report carried by a Physical Uplink Control Channel (PUCCH), y=2; and for a periodic CSI report carried by the PUCCH, y=3. For the second CSI report or the third CSI report, their priority values may also be determined according to the above formula (1).

Manner 2: determining the priority value according to the L1-CLI measurement capability reported by the terminal

If the terminal reports that it supports L1-CLI measurement, the priority value is determined according to the first formula (i.e., Formula (1)); otherwise, the priority value may be determined in a relevant manner. In some embodiments, for a CSI report that does not carry L1-CLI, the priority value of the corresponding CSI report may also be calculated by using Formula (1).

II. Determine the report content of the first CSI report

By determining the report content of the first CSI report, the terminal can report the corresponding content, and the network device can determine the content reported by the terminal, so that corresponding processing (such as CLI cancellation/suppression) can be performed based on the reported content.

The report content of the CSI report may include one or more of the following: an RSSI measurement resource and the RSSI value on the RSSI measurement resource; an RSRP measurement resource and the RSRP value on the RSRP measurement resource; the RSSI measurement resource with the maximum or minimum RSSI value and the RSSI value on the RSSI measurement resource; the RSRP measurement resource with the maximum or minimum RSRP value and the RSRP value on the RSRP measurement resource.

When determining the report content of the first CSI report, the report content may be determined in at least the following two manners:

Manner 1: determine the report content based on the type of L1-CLI measurement information included in the first CSI report.

The type of L1-CLI measurement information may include an RSSI value on an RSSI measurement resource or an RSRP value on an RSRP measurement resource. In other words, if the measurement information included in L1-CLI is different, the report content may also be different.

If the L1-CLI measurement information carried in the first CSI report is RSSI, the terminal may report the N1 measurement resources with the smallest interference and the measurement results on the N1 measurement resources; or, the terminal may report the first measurement resource among the N1 measurement resources with the smallest interference, the first measurement result on the first measurement resource, and the difference between the second measurement result and the first measurement result. wherein, the first measurement result on the first measurement resource is the minimum value among the measurement results on the N1 measurement resources, and the second measurement result is the measurement result excluding the first measurement result among the measurement results on the N1 measurement resources. N1 is an integer greater than 0, and may be specified by a protocol or indicated to the terminal by the network device through high-layer signaling. In some embodiments, the N1 measurement resources with the smallest interference and the measurement results on the N1 measurement resources may be the N1 measurement resources with the smallest interference in the measurement resource set configured by the network device and the measurement results on the N1 measurement resources.

For example, when N1 = 1, the RSSI measurement result is carried by K1 bits. When N1 > 1, the terminal reports the N1 measurement resources with the smallest interference and the corresponding RSSI measurement results, and the RSSI measurement result corresponding to each measurement resource is carried by K1 bits; or, the terminal reports the N1 measurement resources with the smallest interference and the corresponding RSSI measurement results. Among the N1 measurement results, the minimum RSSI measurement result is carried by K1 bits, and for the remaining N1-1 smaller RSSI measurement results, the terminal may report the difference between the N1-1 RSSI measurement results and the minimum RSSI measurement result, and the difference is carried by M1 bits. N1, K1, and M1 are positive integers. For example, N1 is 4 or 8, K1 is 7, 6, or 5, and M1 is 5, 4, or 3.

Optionally, if the L1-CLI measurement information carried in the first CSI report is RSSI, the terminal may report N2 measurement resources and the measurement results on the N2 measurement resources; or, the terminal may report the first measurement resource among the N2 measurement resources, the first measurement result on the first measurement resource, and the difference between the second measurement result and the first measurement result. wherein, the first measurement result on the first measurement resource is the minimum value among the measurement results on the N2 measurement resources, and the second measurement result is the measurement result excluding the first measurement result among the measurement results on the N2 measurement resources. That is, in this manner, the terminal determines to report the N2 measurement resources and the measurement results on the N2 measurement resources, and the measurement results of the N2 measurement resources are not necessarily the N2 smallest measurement results among all measurement results. N2 is an integer greater than 0, and may be specified by a protocol or indicated to the terminal by the network device through high-layer signaling.

For example, when N2 = 1, the RSSI measurement result is carried by K2 bits. When N2 > 1, the terminal reports the N2 measurement resources and the corresponding RSSI measurement results, and the RSSI measurement result corresponding to each measurement resource is carried by K1 bits; or, the terminal reports the N2 measurement resources and the corresponding RSSI measurement results. For the remaining N2-1 RSSI measurement results, the terminal may report the difference between the N2-1 RSSI measurement results and the minimum RSSI measurement result among the N2 measurement results, and the difference is carried by M2 bits. N2, K2, and M2 are positive integers. For example, N2 is 4 or 8, K2 is 7, 6, or 5, and M2 is 5, 4, or 3.

In the above manner, for inter-cell L1-CLI, if there is no information interaction between network devices, the network device cannot obtain interference source information. Therefore, it is impossible to suppress or eliminate CLI by limiting the interference source. However, through this manner, the network device can schedule the terminal on resources with less interference according to the information about the minimum interference reported by the terminal. For intra-cell L1-CLI, although the base station can determine the interference source based on historical scheduling information, the process of determining the interference source will introduce additional complexity to the network device side. By adopting this manner, CLI can be suppressed or eliminated without introducing additional implementation complexity.

If the L1-CLI measurement information carried in the first CSI report is RSRP, the terminal may report the N3 measurement resources with the largest interference and the measurement results on the N3 measurement resources; or, the terminal may report the third measurement resource among the N3 measurement resources with the largest interference, the third measurement result on the third measurement resource, and the difference between the fourth measurement result and the third measurement result. wherein, the third measurement result on the third measurement resource is the maximum value among the measurement results on the N3 measurement resources, and the fourth measurement result is the measurement result excluding the third measurement result among the measurement results on the N3 measurement resources. N3 is an integer greater than 0, and may be specified by a protocol or indicated to the terminal by the network device through high-layer signaling. In some embodiments, the N3 measurement resources with the largest interference and the measurement results on the N3 measurement resources may be the N3 measurement resources with the largest interference in the measurement resource set configured by the network device and the measurement results on the N3 measurement resources.

For example, when N3 = 1, the RSRP measurement result is reported by K3 bits. When N3 > 1, the terminal reports the N3 measurement resources with the largest interference and the corresponding RSRP measurement results, and the RSRP measurement result corresponding to each measurement resource is carried by K2 bits; or, the terminal reports the N3 measurement resources with the largest interference and the corresponding RSRP measurement results. For the remaining N3-1 larger RSRP measurement results, the terminal may report the difference between the N3-1 larger RSRP measurement results and the maximum RSRP measurement result, and the difference is carried by M3 bits. N3, K3, and M3 are positive integers. For example, N3 is 4 or 8, K3 is 7, 6, or 5, and M3 is 5, 4, or 3.

Optionally, the terminal reports N4 measurement resources and the measurement results on the N4 measurement resources; or, the terminal reports the third measurement resource among the N4 measurement resources, the third measurement result on the third measurement resource, and the difference between the fourth measurement result and the third measurement result. wherein, the third measurement result on the third measurement resource is the maximum value among the measurement results on the N4 measurement resources, and the fourth measurement result is the measurement result excluding the third measurement result among the measurement results on the N4 measurement resources. That is, in this manner, the terminal itself determines to report the N4 measurement resources and the measurement results on the N4 measurement resources, and the measurement results of the N4 measurement resources are not necessarily the N4 largest measurement results among all measurement results. N4 is an integer greater than 0, and may be specified by a protocol or indicated to the terminal by the network device through high-layer signaling.

For example, when N4 = 1, the RSRP measurement result is reported by K4 bits. When N4 > 1, the terminal reports the N4 measurement resources and the corresponding RSRP measurement results, and the RSRP measurement result corresponding to each measurement resource is carried by K4 bits; or, the terminal reports the N4 measurement resources and the corresponding RSRP measurement results. For the remaining N4-1 RSRP measurement results, the terminal may report the difference between the N4-1 RSRP measurement results and the maximum RSRP measurement result among the N4 RSRP measurement results, and the difference is carried by M4 bits. N4, K4, and M4 are positive integers. For example, N4 is 4 or 8, K4 is 7, 6, or 5, and M4 is 5, 4, or 3.

Through the above manner, when scheduling an interfered terminal, the network device can avoid resources with relatively large interference; or, solve the CLI interference problem by managing the interfering terminals. Since the RSRP measurement result can distinguish interference sources, for intra-cell CLI, the network device can stagger the strongly interfering terminals and interfered terminals in the time domain, frequency domain, or spatial domain according to the RSRP measurement result; for inter-cell CLI, the serving base station can send the measurement information to the neighboring base station, so that the neighboring base station can manage the interfering terminals.

Manner 2: determine the report content according to protocol regulations.

That is, in this manner, the terminal reports the corresponding content according to the protocol regulations; and the network device obtains the content reported by the terminal according to the protocol regulations. In this manner, the terminal does not need to distinguish the type information of the measurement results reported by L1-CLI, but processes different types of measurement results in a unified manner.

Specifically, the protocol may be regulated as follows: report the N5 measurement resources with the smallest interference and the measurement results (RSSI measurement results and/or RSRP measurement results) on the N5 measurement resources; or, report the first measurement resource among the N5 measurement resources with the smallest interference, the first measurement result on the first measurement resource, and the difference between the second measurement result and the first measurement result. wherein, the first measurement result on the first measurement resource is the minimum value among the measurement results on the N5 measurement resources, and the second measurement result is the measurement result excluding the first measurement result among the measurement results on the N5 measurement resources. N5 is an integer greater than 0, and may be specified by a protocol. In some embodiments, the N5 measurement resources with the smallest interference and the measurement results on the N5 measurement resources may be the N5 measurement resources with the smallest interference in the measurement resource set configured by the network device and the measurement results on the N5 measurement resources.

For example, when N5 = 1, the RSSI measurement result is carried by K5 bits. When N5 > 1, the terminal reports the N5 measurement resources with the smallest interference and the corresponding measurement results, and the measurement result corresponding to each measurement resource is carried by K5 bits; or, the terminal reports the N5 measurement resources with the smallest interference and the corresponding measurement results. For the remaining N5-1 smaller measurement results, the terminal may report the difference between the N5-1 measurement results and the minimum measurement result, and the difference is carried by M5 bits. N5, K5, and M5 are positive integers. For example, N5 is 4 or 8, K5 is 7, 6, or 5, and M5 is 5, 4, or 3.

Optionally, N6 measurement resources and the measurement results (RSSI measurement results and/or RSRP measurement results) on the N6 measurement resources are reported; or, the first measurement resource among the N6 measurement resources, the first measurement result on the first measurement resource, and the difference between the second measurement result and the first measurement result are reported, wherein, the first measurement result on the first measurement resource is the minimum value among the measurement results on the N6 measurement resources, and the second measurement result is the measurement result excluding the first measurement result among the measurement results on the N6 measurement resources. N6 is an integer greater than 0, and may be specified by a protocol.

For example, when N6 = 1, the RSSI measurement result is carried by K6 bits. When N6 > 1, the terminal reports the N6 measurement resources and the corresponding measurement results, and the measurement result corresponding to each measurement resource is carried by K6 bits; or, the terminal reports the N6 measurement resources and the corresponding measurement results. For the remaining N6-1 measurement results, the terminal may report the difference between the N6-1 measurement results and the minimum measurement result among the N6 measurement results, and the difference is carried by M6 bits. N6, K6, and M6 are positive integers. For example, N6 is 4 or 8, K6 is 7, 6, or 5, and M6 is 5, 4, or 3.

The N7 measurement resources with the largest interference and the measurement results (RSSI measurement results and/or RSRP measurement results) on the N7 measurement resources are reported; or, the third measurement resource among the N7 measurement resources with the largest interference, the third measurement result on the third measurement resource, and the difference between the fourth measurement result and the third measurement result are reported, wherein, the third measurement result on the third measurement resource is the maximum value among the measurement results on the N7 measurement resources, and the fourth measurement result is the measurement result excluding the third measurement result among the measurement results on the N7 measurement resources. N7 is an integer greater than 0, and may be specified by a protocol. In some embodiments, the N7 measurement resources with the largest interference and the measurement results on the N7 measurement resources may be the N7 measurement resources with the largest interference in the measurement resource set configured by the network device and the measurement results on the N7 measurement resources.

For example, when N7 = 1, the measurement result is reported by K7 bits. When N7 > 1, the terminal reports the N7 measurement resources with the largest interference and the corresponding measurement results, and the measurement result corresponding to each measurement resource is carried by K7 bits; or, reports the N7 measurement resources with the largest interference and the corresponding measurement results. For the remaining N7-1 larger measurement results, the difference between the N7-1 larger measurement results and the maximum measurement result may be reported, and the difference is carried by M7 bits. N7, K7, and M7 are positive integers. For example, N7 is 4 or 8, K7 is 7, 6, or 5, and M7 is 5, 4, or 3.

Optionally, N8 measurement resources and the measurement results (RSSI measurement results and/or RSRP measurement results) on the N8 measurement resources are reported; or, the third measurement resource among the N8 measurement resources, the third measurement result on the third measurement resource, and the difference between the fourth measurement result and the third measurement result are reported, wherein, the third measurement result on the third measurement resource is the maximum value among the measurement results on the N8 measurement resources, and the fourth measurement result is the measurement result excluding the third measurement result among the measurement results on the N8 measurement resources. N8 is an integer greater than 0, and may be specified by a protocol.

For example, when N8 = 1, the measurement result is reported by K8 bits. When N8 > 1, the terminal reports the N8 measurement resources and the corresponding measurement results, and the measurement result corresponding to each measurement resource is carried by K8 bits; or, report the N8 measurement resources and the corresponding measurement results. For the remaining N8-1 measurement results, the difference between the N8-1 measurement results and the maximum measurement result among the N8 measurement results may be reported, and the difference is carried by M8 bits. N8, K8, and M8 are positive integers. For example, N8 is 4 or 8, K8 is 7, 6, or 5, and M8 is 5, 4, or 3.

III. Determine the calculation delay requirement of the first CSI report

In the embodiments of the present disclosure, the calculation delay requirement mainly includes the calculation delay requirement of RSSI (e.g., the calculation delay requirement of aperiodic L1-CLI RSSI) and the calculation delay requirement of RSRP (e.g., the calculation delay requirement of L1-CLI RSRP that does not support beam-based measurement). Through the calculation delay requirement, the terminal can determine whether to perform L1-CLI measurement/reporting according to the calculation delay requirement of L1-CLI, thereby preventing the terminal from still performing L1-CLI measurement/reporting when there is insufficient measurement/reporting time.
The calculation delay requirement for L1-CLI RSSI may be determined in at least the following two manners: Manner 1: determine a first calculation delay predefined based on each SCS, wherein, the first calculation delay is less than or equal to the calculation delay ($Z_3$, $Z_3$') corresponding to L1-RSRP. The CSI report carrying L1-RSRP needs to meet the calculation delay requirement of ($Z_3$, $Z_3$').
The first calculation delay includes a third calculation delay ($Z_4$) and a fourth calculation delay ($Z_4$'). In this manner, the third calculation delay and the fourth calculation delay predefined based on each SCS are determined; different SCSs have corresponding third calculation delay and fourth calculation delay respectively.
The third calculation delay is a constant; or the third calculation delay is determined according to the fourth calculation delay; or the third calculation delay is determined according to the fourth calculation delay and the beam switch timing capability (beamSwitchTiming) reported by the terminal; the fourth calculation delay is a constant.
For example, the mapping relationship among the third calculation delay, the fourth calculation delay, and SCS may be as shown in Table 1, Table 2, or Table 3.

Table 1

| $\mu$ (SCS) | Z4 [symbols] | |
|---|---|---|
| | Z4 | Z'4 |
| 0 | 10 | 8 |
| 1 | 13 | 11 |
| 2 | 25 | 21 |
| 3 | 43 | 36 |

Table 2

| $\mu$ (SCS) | Z4 [symbols] | |
|---|---|---|
| | Z4 | Z'4 |
| 0 | Z'4+2 | 2 or 4 |
| 1 | Z'4+2 | 4 or 8 |
| 2 | Z'4+4 | 8 or 14 |
| 3 | Z'4+7 | 14 or 28 |

Table 3

| $\mu$ (SCS) | Z4 [symbols] | |
|---|---|---|
| | Z4 | Z'4 |
| 0 | 22 | 2 or 4 |
| 1 | 33 | 4 or 8 |
| 2 | Z'4+ KB$_1$ | 8 or 14 |
| 3 | Z'4+ KB$_2$ | 14 or 28 |

wherein, $KB_1$ ($l$=1,2......) is determined by the beamSwitchTiming reported by the terminal.

Manner 2: determine the first calculation delay according to the CLI reporting capability of the terminal

wherein, the first calculation delay includes a third calculation delay ($Z_4$) and a fourth calculation delay (Z4'). The first calculation delay is less than or equal to the calculation delay ($Z_3$, $Z_3$') corresponding to L1-RSRP. In this manner, the fourth calculation delay is determined according to the CLI reporting capability corresponding to each SCS, and the third calculation delay is determined according to the fourth calculation delay.

The calculation delay corresponding to each SCS may be determined according to the CLI reporting capability (CLI-reporting capability), for example, as shown in the mapping relationship in Table 4. Correspondingly, the value corresponding to the CLI-reporting capability may be used as $Z_4$'.

Table 4

| $\mu$ (SCS) | CLI-reporting capability ( $Z_4'$ ) |
|---|---|
| 0 | 2 or 4 |
| 1 | 4 or 8 |
| 2 | 8 or 14 |
| 3 | 14 or 28 |

wherein, $Z_4$ is determined according to $Z_4'$, for example, $Z_4 = Z_4' + \sigma$, and $\sigma$ is a positive integer greater than or equal to 1.

The calculation delay requirement for L1-CLI RSRP may be determined in at least the following two manners.

Manner 1: determine a predefined second calculation delay

That is, in this manner, the calculation delay requirement of RSRP is predefined. wherein, the second calculation delay is less than or equal to the calculation delay ($Z_3$, $Z_3'$) corresponding to L1-RSRP.

The second calculation delay includes a fifth calculation delay (($Z_5$) and a sixth calculation delay ( $Z_5'$ ). In this manner, the fifth calculation delay and the sixth calculation delay corresponding to each predefined SCS are determined. wherein, the fifth calculation delay is a constant; or the fifth calculation delay is determined according to the sixth calculation delay; the sixth calculation delay is a constant.

For example, the mapping relationship between the fifth calculation delay, the sixth calculation delay, and SCS may be as shown in Table 5, Table 6, or Table 7.

Table 5

| $\mu$ (SCS) | $Z_5$ [symbols] | |
|---|---|---|
| | $Z_5$ | Z'$_5$ |
| 0 | 10 | 8 |
| 1 | 13 | 11 |
| 2 | 25 | 21 |
| 3 | 43 | 36 |

Table 6

| $\mu$ (SCS) | $Z_5$ [symbols] | |
|---|---|---|
| | $Z_5$ | Z'$_5$ |
| 0 | 22 | 16 |
| 1 | 33 | 30 |
| 2 | 44 | 42 |

(continued)

| μ (SCS) | $Z_5$ [symbols] | |
| --- | --- | --- |
| | $Z_5$ | $Z'_5$ |
| 3 | 97 | 85 |
| 5 | 388 | 340 |
| 6 | 776 | 680 |

Table 7

| μ (SCS) | $Z_5$ [symbols] | |
| --- | --- | --- |
| | $Z_5$ | $Z'_5$ |
| 0 | $Z'_5$+2 | 2 or 4 or 8 |
| 1 | $Z'_5$+2 | 4 or 8 or 14 |
| 2 | $Z'_5$+4 | 8 or 14 or 28 |
| 3 | $Z'_5$+7 | 14 or 28 or 56 |

Manner 2: determine the second calculation delay according to the beam report timing capability (beamReportTiming) reported by the terminal, wherein, the second calculation delay is less than or equal to the calculation delay ($Z_3$, $Z'_3$) corresponding to L1-RSRP.

The second calculation delay includes a fifth calculation delay ($Z_5$) and a sixth calculation delay ($Z'_5$). In this manner, when μ=0 or μ=1, the fifth calculation delay is a constant; or when μ=2 or μ=3 or μ=5 or μ=6, the fifth calculation delay is determined according to the beamReportTiming reported by the terminal, and the sixth calculation delay is determined according to the beamReportTiming reported by the terminal.

Specifically, when determining the fifth calculation delay according to the beamReportTiming reported by the terminal, the fifth calculation delay may be determined according to the beamReportTiming reported by the terminal and a first capability; wherein, the first capability is used to indicate the time interval between the moment when the terminal receives the DCI for triggering aperiodic L1-CLI reporting and the sending moment of the aperiodic reference signal.

For example, when μ = 0 and 1, ($Z_5$, $Z'_5$) is determined according to the corresponding relationship in Table 8;

When μ = 2, 3, 5, and 6, ($Z_5$, $Z'_5$) is determined according to the corresponding relationship in Table 8; wherein, delta_i is less than $KB_l$, wherein l=1, 2, 3, 4($KB_l$ is determined by the beamSwitchTiming reported by the terminal), and delta_i is the time interval between the moment when the terminal receives the DCI for triggering aperiodic L1-CLI reporting and the sending moment of the aperiodic reference signal. For example, the value of delta_i may be 0, 1, 2, or 3; Xμ (μ=0,1,2,3,5,6...) is determined according to the beamReportTiming capability reported by the terminal.

Table 8

| μ (SCS) | $Z_5$ [symbols] | |
| --- | --- | --- |
| | $Z_5$ | $Z'_s$ |
| 0 | 22 | $X_0$ |
| 1 | 33 | $X_1$ |
| 2 | min(44,$X_2$+ delta_1) | $X_2$ |
| 3 | min(97,$X_3$+ delta_2) | $X_3$ |
| 5 | min(388, $X_5$+ delta_3) | $X_5$ |
| 6 | min(776, $X_6$+ delta_4) | $X_6$ |

After determining the above information, the terminal may perform processing based on the information. For example, determine whether to send the first CSI report according to the determined priority value; report the corresponding report content to the network device according to the determined report content; send the first CSI report when the calculation delay requirement is met according to the determined calculation delay requirement.

In the embodiments of the present disclosure, one or more pieces of information such as the priority, report content, and calculation delay requirement of the first CSI report carrying L1-CLI are determined, so that a specific implementation solution for L1-CLI reporting can be determined.

Referring to FIG. 2, FIG. 2 is a flowchart of an information processing method according to an embodiment of the present disclosure, which is applied to a network device. As shown in FIG. 2, the method includes the following steps: Step 201: determine information of a first CSI report, where the first CSI report carries measurement information of L1-CLI.

The information includes one or more of the following: a priority value; report content; a calculation delay requirement.

The priority value of the first CSI report is less than the priority value of a second CSI report; or the priority value of the first CSI report is less than the priority value of a third CSI report and greater than the priority value of the second CSI report. The second CSI report carries L1-RSRP or L1-SINR, and the third CSI report does not carry the measurement information of L1-CLI, L1-RSRP, or L1-SINR. A higher priority value indicates a lower priority, and vice versa. For the manner in which the network device determines the priority value, reference may be made to the specific implementation of determining the priority value in the foregoing method embodiments by the terminal.

When the network device determines the report content of the first CSI report, it may determine the report content based on the type of L1-CLI measurement information included in the first CSI report; or determine the report content according to protocol regulations.

Specifically, if the L1-CLI measurement information carried in the first CSI report is RSSI, the network device determines that the report content is: the N1 measurement resources with the smallest interference and the measurement results on the N1 measurement resources; or the first measurement resource among the N1 measurement resources with the smallest interference, the first measurement result on the first measurement resource, and the difference between the second measurement result and the first measurement result, where the first measurement result on the first measurement resource is the minimum value among the measurement results on the N1 measurement resources, and the second measurement result is the measurement result excluding the first measurement result among the measurement results on the N1 measurement resources; or the N2 measurement resources and the measurement results on the N2 measurement resources; or the first measurement resource among the N2 measurement resources, the first measurement result on the first measurement resource, and the difference between the second measurement result and the first measurement result, where the first measurement result on the first measurement resource is the minimum value among the measurement results on the N2 measurement resources, and the second measurement result is the measurement result excluding the first measurement result among the measurement results on the N2 measurement resources; or, if the L1-CLI measurement information carried in the first CSI report is RSRP, the network device determines that the report content is: the N3 measurement resources with the largest interference and the measurement results on the N3 measurement resources; or the third measurement resource among the N3 measurement resources with the largest interference, the third measurement result on the third measurement resource, and the difference between the fourth measurement result and the third measurement result, where the third measurement result on the third measurement resource is the maximum value among the measurement results on the N3 measurement resources, and the fourth measurement result is the measurement result excluding the third measurement result among the measurement results on the N3 measurement resources; or the N4 measurement resources and the measurement results on the N4 measurement resources; or the third measurement resource among the N4 measurement resources, the third measurement result on the third measurement resource, and the difference between the fourth measurement result and the third measurement result, where the third measurement result on the third measurement resource is the maximum value among the measurement results on the N4 measurement resources, and the fourth measurement result is the measurement result excluding the third measurement result among the measurement results on the N4 measurement resources; wherein, N1, N2, N3, or N4 is an integer greater than 0.

Specifically, the network device may determine the report content according to protocol regulations as follows:

determining the report content as: the N5 measurement resources with the smallest interference and the measurement results on the N5 measurement resources; or the first measurement resource among the N5 measurement resources with the smallest interference, the first measurement result on the first measurement resource, and the difference between the second measurement result and the first measurement result, where the first measurement result on the first measurement resource is the minimum value among the measurement results on the N5 measurement resources, and the second measurement result is the measurement result excluding the first measurement result among the measurement results on the N5 measurement resources;

or determining the report content as: the N6 measurement resources and the measurement results on the N6 measurement resources; or the first measurement resource among the N6 measurement resources, the first measurement result on the first measurement resource, and the difference between the second measurement result and the first measurement result, where the first measurement result on the first measurement resource is the minimum value among the measurement results on the N6 measurement resources, and the second measurement result is the measurement result excluding the first measurement result among the measurement results on the N6 measurement resources;

or determining the report content as: the N7 measurement resources with the largest interference and the measurement results on the N7 measurement resources; or the third measurement resource among the N7 measurement resources with the largest interference, the third measurement result on the third measurement resource, and the difference between the fourth measurement result and the third measurement result, where the third measurement result on the third measurement resource is the maximum value among the measurement results on the N7 measurement resources, and the fourth measurement result is the measurement result excluding the third measurement result among the measurement results on the N7 measurement resources;

or determining the report content as: the N8 measurement resources and the measurement results on the N8 measurement resources; or the third measurement resource among the N8 measurement resources, the third measurement result on the third measurement resource, and the difference between the fourth measurement result and the third measurement result, where the third measurement result on the third measurement resource is the maximum value among the measurement results on the N8 measurement resources, and the fourth measurement result is the measurement result excluding the third measurement result among the measurement results on the N8 measurement resources; wherein, N5, N6, N7, or N8 is an integer greater than 0.

For the manner in which the network device determines the calculation delay requirement, reference may be made to the description of the manner in which the terminal determines the calculation delay requirement.

Step 202: perform processing according to the information.

Here, the processing mainly includes: receiving the first CSI report according to the determined priority value; performing CLI cancellation or suppression according to the report content; determining whether to receive the first CSI report according to the calculation delay requirement, etc.

In the embodiments of the present disclosure, one or more pieces of information such as the priority, report content, and calculation delay requirement of the first CSI report carrying L1-CLI are determined, so that a specific implementation solution for L1-CLI reporting can be determined.

The technical solutions provided in the embodiments of the present disclosure can be applied to various systems, especially the 5th Generation (5G) system. For example, the applicable systems may include a Global System for Mobile Communications (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, an LTE-Advanced (LTE-A) system, a Universal Mobile Telecommunications System (UMTS), a Worldwide Interoperability for Microwave Access (WiMAX) system, a 5G New Radio (NR) system, etc. All these systems include terminal devices and network devices. The system may also include a core network part, such as an Evolved Packet System (EPS), a 5G System (5GS), etc.

The terminal device involved in the embodiments of the present disclosure may be a device that provides voice and/or data connectivity to a user, a handheld device with a wireless connection function, or another processing device connected to a wireless modem. In different systems, the name of the terminal device may also be different. For example, in a 5G system, the terminal device may be called User Equipment (UE). The wireless terminal device can communicate with one or more Core Networks (CN) through a Radio Access Network (RAN). The wireless terminal device may be a mobile terminal device, such as a mobile phone (also called a "cellular" phone) and a computer with a mobile terminal device. For example, it may be a portable, pocket-sized, handheld, computer-built-in, or vehicle-mounted mobile device that exchanges voice and/or data with the radio access network. Examples include Personal Communication Service (PCS) phones, cordless phones, Session Initiation Protocol (SIP) phones, Wireless Local Loop (WLL) stations, Personal Digital Assistants (PDAs), etc. The wireless terminal device may also be called a system, a subscriber unit, a subscriber station, a mobile station, a mobile device, a remote station, an access point, a remote terminal, an access terminal, a user terminal, a user agent, or a user device, which is not limited in the embodiments of the present disclosure.

The network device involved in the embodiments of the present disclosure may be a base station, and the base station may include multiple cells that provide services for terminals. Depending on specific application scenarios, the base station may also be called an access point, or a device in the access network that communicates with a wireless terminal device through one or more sectors on the air interface, or by other names. The network device can be used to convert the received air interface frame into an Internet Protocol (IP) packet and vice versa, and act as a router between the wireless terminal device and the rest of the access network (the rest of the access network may include an IP communication network). The network device can also coordinate the attribute management of the air interface. For example, the network device involved in the embodiments of the present disclosure may be a Base Transceiver Station (BTS) in a Global System for Mobile Communications (GSM) or Code Division Multiple Access (CDMA) system, a NodeB in a Wideband Code Division Multiple Access (WCDMA) system, an Evolved Node B (eNB or e-NodeB) in a Long Term Evolution (LTE) system, a 5G base station (gNB) in a next-generation system, a Home Evolved Node B (HeNB), a relay node, a home base station (femto), a pico base station (pico), etc., which is not limited in the embodiments of the present disclosure. In some network structures, the network device may include a Centralized Unit (CU) node and a Distributed Unit (DU) node, and the centralized unit and the distributed unit may also be arranged separately in terms of geography.

The network device and the terminal device can each use one or more antennas to perform Multi-Input Multi-Output (MIMO) transmission. The MIMO transmission can be Single-User MIMO (SU-MIMO) or Multi-User MIMO (MU-MIMO). According to the form and number of antenna combinations, MIMO transmission can be Two-Dimensional MIMO (2D-MIMO), Three-Dimensional MIMO (3D-MIMO), Full-Dimension MIMO (FD-MIMO), or Massive MIMO (massive-MIMO), and can also be diversity transmission, precoding transmission, or beamforming transmission, etc.

As shown in FIG. 3, an information processing apparatus according to an embodiment of the present disclosure is applied to a network device, and includes: a processor 300, used to read a program in a memory 320 and execute the following processes:

determining information of a first CSI report, where the first CSI report carries measurement information of L1-CLI;
performing processing according to the information;
wherein, the information includes one or more of the following: a priority value; report content; a calculation delay requirement.

The information processing apparatus further includes a transceiver 310 used to receive and send data under the control of the processor 300.

In FIG. 3, the bus architecture may include any number of interconnected buses and bridges, and specifically links together one or more processors represented by the processor 300 and various circuits of the memory represented by the memory 320. The bus architecture can also link various other circuits such as peripheral devices, voltage regulators, and power management circuits, which are well-known in the art and will not be further described herein. The bus interface provides an interface. The transceiver 310 may be multiple components, i.e., including a transmitter and a receiver, and provides a unit for communicating with various other devices on a transmission medium. The processor 300 is responsible for managing the bus architecture and general processing, and the memory 320 may store data used by the processor 300 when performing operations.

The processor 300 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor 300 is responsible for managing the bus architecture and general processing, and the memory 320 may store data used by the processor 300 when performing operations.

In some embodiments, the priority value of the first CSI report is less than the priority value of a second CSI report; or the priority value of the first CSI report is less than the priority value of a third CSI report and greater than the priority value of the second CSI report; wherein, the second CSI report carries L1-RSRP or L1-SINR, and the third CSI report does not carry the measurement information of L1-CLI, L1-RSRP, or L1-SINR.

In some embodiments, the processor 300 is further used to read the program and execute the following steps: determining the priority value according to the L1-CLI configuration information of the terminal; or determining the priority value according to the L1-CLI measurement capability reported by the terminal.

In some embodiments, the processor 300 is further used to read the program and execute the following steps: if L1-CLI configuration information is sent to the terminal through DCI or L1-CLI configuration information is configured for the terminal through high-layer signaling, determining the priority value according to the first formula;

wherein, the first formula is expressed as:

$$\mathrm{Pri}_{\mathrm{iCSI}}(y, k, c, s) = 3 \cdot \mathrm{N}_{\mathrm{cells}} \cdot \mathrm{M}_s \cdot y + \mathrm{N}_{\mathrm{cells}} \cdot \mathrm{M}_s \cdot k + \mathrm{M}_s \cdot c + s;$$

wherein, $\mathrm{Pri}_{\mathrm{iCSI}}(y, k, c, s)$ represents a priority value; c represents a serving cell index; s represents a report configuration ID (reportConfigID); $\mathrm{N}_{\mathrm{cells}}$ represents a value of a higher-layer configuration parameter maxNrofServingCells; $\mathrm{M}_s$ represents a value of a higher-layer parameter maxNrofCSI-ReportConfigurations; $k$, $y$ respectively represent parameters;
wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, the processor 300 is further used to read the program and execute the following steps:

if the terminal reports that it supports L1-CLI measurement, determining the priority value according to the first formula;

wherein, the first formula is expressed as:

$$\mathrm{Pri_{iCSI}}(y, k, c, s) = 3 \cdot \mathrm{N_{cells}} \cdot \mathrm{M_s} \cdot y + \mathrm{N_{cells}} \cdot \mathrm{M_s} \cdot k + \mathrm{M_s} \cdot c + s;$$

wherein, $\mathrm{Pri_{iCSI}}(y, k, c, s)$ represents a priority value; c represents a serving cell index; s represents a report configuration ID (reportConfigID); $\mathrm{N_{cells}}$ represents a value of a higher-layer configuration parameter maxNrofSer-vingCells; $\mathrm{M_s}$ represents a value of a higher-layer parameter maxNrofCSI-ReportConfigurations; $k$, y respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report

**In** some embodiments, the processor 300 is further used to read the program and execute the following steps: determining the report content based on the type of L1-CLI measurement information included in the first CSI report; or determining the report content according to protocol regulations.

**In** some embodiments, the processor 300 is further used to read the program and execute the following steps:

if the L1-CLI measurement information carried in the first CSI report is RSSI, determining the report content as: the N1 measurement resources with the smallest interference and the measurement results on the N1 measurement resources; or the first measurement resource among the N1 measurement resources with the smallest interference, the first measurement result on the first measurement resource, and the difference between the second measurement result and the first measurement result, where the first measurement result on the first measurement resource is the minimum value among the measurement results on the N1 measurement resources, and the second measurement result is the measurement result excluding the first measurement result among the measurement results on the N1 measurement resources; or the N2 measurement resources and the measurement results on the N2 measurement resources;

or the first measurement resource among the N2 measurement resources, the first measurement result on the first measurement resource, and the difference between the second measurement result and the first measurement result, where the first measurement result on the first measurement resource is the minimum value among the measurement results on the N2 measurement resources, and the second measurement result is the measurement result excluding the first measurement result among the measurement results on the N2 measurement resources;

or, if the L1-CLI measurement information carried in the first CSI report is RSRP, determining the report content as: the N3 measurement resources with the largest interference and the measurement results on the N3 measurement resources; or the third measurement resource among the N3 measurement resources with the largest interference, the third measurement result on the third measurement resource, and the difference between the fourth measurement result and the third measurement result, where the third measurement result on the third measurement resource is the maximum value among the measurement results on the N3 measurement resources, and the fourth measurement result is the measurement result excluding the third measurement result among the measurement results on the N3 measurement resources; or the N4 measurement resources and the measurement results on the N4 measurement resources;

or the third measurement resource among the N4 measurement resources, the third measurement result on the third measurement resource, and the difference between the fourth measurement result and the third measurement result, where the third measurement result on the third measurement resource is the maximum value among the measurement results on the N4 measurement resources, and the fourth measurement result is the measurement result excluding the third measurement result among the measurement results on the N4 measurement resources;

wherein, N1, N2, N3, or N4 is an integer greater than 0.

In some embodiments, the processor 300 is further used to read the program and execute the following steps:

determining the report content as: the N5 measurement resources with the smallest interference and the measurement results on the N5 measurement resources; or the first measurement resource among the N5 measurement resources with the smallest interference, the first measurement result on the first measurement resource, and the difference between the second measurement result and the first measurement result, where the first measurement result on the first measurement resource is the minimum value among the measurement results on the N5 measurement resources, and the second measurement result is the measurement result excluding the first measurement result among the measurement results on the N5 measurement resources;

or determining the report content as: the N6 measurement resources and the measurement results on the N6 measurement resources; or the first measurement resource among the N6 measurement resources, the first measurement result on the first measurement resource, and the difference between the second measurement result and the first measurement result, where the first measurement result on the first measurement resource is the minimum value among the measurement results on the N6 measurement resources, and the second measurement result is the measurement result excluding the first measurement result among the measurement results on the N6 measurement resources;

or determining the report content as: the N7 measurement resources with the largest interference and the measurement results on the N7 measurement resources; or the third measurement resource among the N7 measurement resources with the largest interference, the third measurement result on the third measurement resource, and the difference between the fourth measurement result and the third measurement result, where the third measurement result on the third measurement resource is the maximum value among the measurement results on the N7 measurement resources, and the fourth measurement result is the measurement result excluding the third measurement result among the measurement results on the N7 measurement resources;

or determining the report content as: the N8 measurement resources and the measurement results on the N8 measurement resources; or the third measurement resource among the N8 measurement resources, the third measurement result on the third measurement resource, and the difference between the fourth measurement result and the third measurement result, where the third measurement result on the third measurement resource is the maximum value among the measurement results on the N8 measurement resources, and the fourth measurement result is the measurement result excluding the third measurement result among the measurement results on the N8 measurement resources;

wherein, N5, N6, N7, or N8 is an integer greater than 0.

In some embodiments, the processor 300 is further used to read the program and execute the following steps:

if the L1-CLI measurement information carried in the first CSI report is RSSI, determining a first calculation delay predefined based on each SCS; or
if the L1-CLI measurement information carried in the first CSI report is RSSI, determining the first calculation delay according to the CLI reporting capability of the terminal;
wherein, the first calculation delay is less than or equal to the calculation delay corresponding to L1-RSRP.

In some embodiments, the first calculation delay includes a third calculation delay and a fourth calculation delay; the processor 300 is further used to read the program and execute the following steps:

determining the third calculation delay and the fourth calculation delay predefined based on each SCS; wherein, different SCSs have corresponding third calculation delay and fourth calculation delay respectively;
The third calculation delay is a constant; or the third calculation delay is determined according to the fourth calculation delay; or the third calculation delay is determined according to the fourth calculation delay and the beamSwitchTiming reported by the terminal; the fourth calculation delay is a constant.

In some embodiments, the first calculation delay includes a third calculation delay and a fourth calculation delay; the processor 300 is further used to read the program and execute the following steps:

determining the fourth calculation delay according to the CLI reporting capability corresponding to each SCS;
determining the third calculation delay according to the fourth calculation delay.

In some embodiments, the processor 300 is further used to read the program and execute the following steps:

if the L1-CLI measurement information carried in the first CSI report is RSRP, determining a predefined second calculation delay; or
if the L1-CLI measurement information carried in the first CSI report is RSRP, determining the second calculation delay according to the beamReportTiming reported by the terminal;
wherein, the second calculation delay is less than or equal to the calculation delay corresponding to L1-RSRP.

In some embodiments, the second calculation delay includes a fifth calculation delay and a sixth calculation delay; the processor 300 is further used to read the program and execute the following steps:
determining the fifth calculation delay and the sixth calculation delay corresponding to each predefined SCS; wherein, the fifth calculation delay is a constant; or the fifth calculation delay is determined according to the sixth calculation delay; the sixth calculation delay is a constant.

In some embodiments, the second calculation delay includes a fifth calculation delay and a sixth calculation delay; the processor 300 is further used to read the program and execute the following steps:

when $\mu=0$ or $\mu=1$, the fifth calculation delay is a constant; or when $\mu=2$ or $\mu=3$ or $\mu=5$ or $\mu=6$, determining a fifth calculation delay according to the beamReportTiming reported by the terminal; determining the sixth calculation delay according to the beamReportTiming reported by the terminal; wherein, $\mu$ represents the Subcarrier Spacing (SCS).

In some embodiments, the processor 300 is further used to read the program and execute the following steps:

determining the fifth calculation delay according to the beamReportTiming reported by the terminal and a first capability; wherein, the first capability is used to indicate the time interval between the moment when the terminal receives the DCI for triggering aperiodic L1-CLI reporting and the sending moment of the aperiodic reference signal.

It should be noted here that the above-mentioned apparatus provided in the embodiments of the present disclosure can implement all the method steps implemented in the above-mentioned method embodiments and can achieve the same technical effects. For the parts and beneficial effects that are the same as those in the method embodiments, detailed descriptions are not repeated in this embodiment.

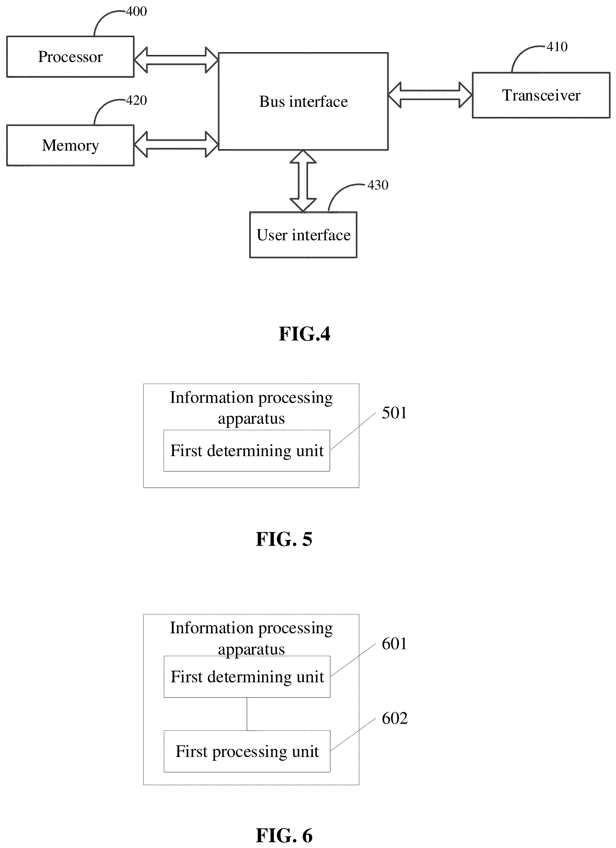

As shown in FIG. 4, an information processing apparatus according to an embodiment of the present disclosure is applied to a terminal, and includes: a processor 400, used to read a program in the memory 420, and perform the following processes:

determining one or more of the following pieces of information of the first CSI report: a priority value; report content; a calculation delay requirement; wherein the first CSI report carries measurement information of L1-CLI.

The information processing apparatus further includes a transceiver 410 used to receive and transmit data under the control of the processor 400.

In FIG. 4, the bus architecture may include any number of interconnected buses and bridges, and specifically links together one or more processors represented by the processor 400 and various circuits of the memory represented by the memory 420. The bus architecture may also link various other circuits, such as peripheral devices, voltage regulators, and power management circuits, which are well known in the art, and therefore will not be further described herein. The bus interface provides an interface. The transceiver 410 may be multiple components, i.e., including a transmitter and a receiver, and provides units for communicating with various other devices on a transmission medium. For different user equipments, the user interface 430 may also be an interface capable of externally connecting to required devices, and the connected devices include but are not limited to a keypad, a display, a speaker, a microphone, a joystick, and the like.

The processor 400 is responsible for managing the bus architecture and general processing, and the memory 420 may store data used by the processor 400 when performing operations.

The processor 400 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

By invoking the computer program stored in the memory, the processor is used to execute any one of the methods provided in the embodiments of the present disclosure according to the obtained executable instructions. The processor and the memory may also be physically arranged separately.

In some embodiments, the priority value of the first CSI report is less than the priority value of a second CSI report; or the priority value of the first CSI report is less than the priority value of a third CSI report and greater than the priority value of the second CSI report; wherein the second CSI report carries L1-RSRP or L1-SINR, and the third CSI report does not carry the measurement information of L1-CLI, L1-RSRP, or L1-SINR.

In some embodiments, the processor 400 is further used to read the program and execute the following steps: determining the priority value according to L1-CLI configuration information of the network device; or determining the priority value according to the L1-CLI measurement capability reported by the terminal.

In some embodiments, the processor 400 is further used to read the program and execute the following steps:

if L1-CLI configuration information configured by the network device through DCI is received, or L1-CLI configuration information configured by the network device through high-layer signaling is obtained, determining the priority value according to the first formula; wherein the first formula is expressed as:

$$\mathrm{Pri}_{\mathrm{iCSI}}(y, k, c, s) = 3 \cdot N_{\mathrm{cells}} \cdot M_s \cdot y + N_{\mathrm{cells}} \cdot M_s \cdot k + M_s \cdot c + s;$$

wherein, $\mathrm{Pri}_{\mathrm{iCSI}}(y, k, c, s)$ represents a priority value; c represents a serving cell index; s represents a report configuration ID (reportConfigID); $N_{\mathrm{cells}}$ represents a value of a higher-layer configuration parameter maxNrof-ServingCells; $M_s$ represents a value of a higher-layer parameter maxNrofCSI-ReportConfigurations; $k$ , y respectively represent parameters;

wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

**In** some embodiments, the processor 400 is further used to read the program and execute the following steps: if the terminal reports that it supports L1-CLI measurement, determining the priority value according to the first formula;

wherein the first formula is expressed as:

$$\mathrm{Pri}_{\mathrm{iCSI}}(y, k, c, s) = 3 \cdot N_{\mathrm{cells}} \cdot M_s \cdot y + N_{\mathrm{cells}} \cdot M_s \cdot k + M_s \cdot c + s;$$

wherein, $\mathrm{Pri}_{\mathrm{iCSI}}(y, k, c, s)$ represents a priority value; c represents a serving cell index; s represents a report configuration ID (reportConfigID); $N_{\mathrm{cells}}$ represents a value of a higher-layer configuration parameter maxNrofSer-vingCells; $M_s$ represents a value of a higher-layer parameter maxNrofCSI-ReportConfigurations; $k$ , y respectively represent parameters;

wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, the processor 400 is further used to read the program and execute the following steps: determining the report content according to the type of L1-CLI measurement information included in the first CSI report; or determining the report content according to protocol specifications.

In some embodiments, the processor 400 is further used to read the program and execute the following steps:

if the L1-CLI measurement information carried in the first CSI report is RSSI, reporting the N1 measurement resources with the smallest interference and the measurement results on the N1 measurement resources, or reporting the first measurement resource among the N1 measurement resources with the smallest interference, the first measurement result on the first measurement resource, and the difference between the second measurement result and the first measurement result (where the first measurement result on the first measurement resource is the minimum value among the measurement results on the N1 measurement resources, and the second measurement result is the measurement result excluding the first measurement result among the measurement results on the N1 measurement resources); or

if the L1-CLI measurement information carried in the first CSI report is RSSI, reporting the N2 measurement resources and the measurement results on the N2 measurement resources, or reporting the first measurement resource among the N2 measurement resources, the first measurement result on the first measurement resource, and the difference between the second measurement result and the first measurement result, where the first measurement result on the first measurement resource is the minimum value among the measurement results on the N2 measurement resources, and the second measurement result is the measurement result excluding the first measurement result among the measurement results on the N2 measurement resources; or

if the L1-CLI measurement information carried in the first CSI report is RSRP, reporting the N3 measurement resources with the largest interference and the measurement results on the N3 measurement resources, or reporting the third measurement resource among the N3 measurement resources with the largest interference, the third measurement result on the third measurement resource, and the difference between the fourth measurement result and the third measurement result, where the third measurement result on the third measurement resource is the maximum value among the measurement results on the N3 measurement resources, and the fourth measurement result is the measurement result excluding the third measurement result among the measurement results on the N3 measurement resources; or

if the L1-CLI measurement information carried in the first CSI report is Reference Signal Received Power (RSRP), reporting the N4 measurement resources and the measurement results on the N4 measurement resources, or reporting the third measurement resource among the N4 measurement resources, the third measurement result on the third measurement resource, and the difference between the fourth measurement result and the third measurement result, where the third measurement result on the third measurement resource is the maximum value among the measurement results on the N4 measurement resources, and the fourth measurement result is the measurement result excluding the third measurement result among the measurement results on the N4 measurement resources; wherein N1, N2, N3, or N4 is an integer greater than 0.

In some embodiments, the processor 400 is further used to read the program and execute the following steps:

reporting the N5 measurement resources with the smallest interference and the measurement results on the N5 measurement resources, or reporting the first measurement resource among the N5 measurement resources with the smallest interference, the first measurement result on the first measurement resource, and the difference between the second measurement result and the first measurement result, where the first measurement result on the first measurement resource is the minimum value among the measurement results on the N5 measurement resources, and the second measurement result is the measurement result excluding the first measurement result among the measurement results on the N5 measurement resources; or

reporting the N6 measurement resources and the measurement results on the N6 measurement resources, or reporting the first measurement resource among the N6 measurement resources, the first measurement result on the first measurement resource, and the difference between the second measurement result and the first measurement result, where the first measurement result on the first measurement resource is the minimum value among the measurement results on the N6 measurement resources, and the second measurement result is the measurement result excluding the first measurement result among the measurement results on the N6 measurement resources; or reporting the N7 measurement resources with the largest interference and the measurement results on the N7 measurement resources, or reporting the third measurement resource among the N7 measurement resources with the largest interference, the third measurement result on the third measurement resource, and the difference between the fourth measurement result and the third measurement result, where the third measurement result on the third measurement resource is the maximum value among the measurement results on the N7 measurement resources, and the fourth measurement result is the measurement result excluding the third measurement result among the measurement results on the N7 measurement resources; or

reporting the N8 measurement resources and the measurement results on the N8 measurement resources, or reporting the third measurement resource among the N8 measurement resources, the third measurement result on the third measurement resource, and the difference between the fourth measurement result and the third measurement result, where the third measurement result on the third measurement resource is the maximum value among the measurement results on the N8 measurement resources, and the fourth measurement result is the measurement result excluding the third measurement result among the measurement results on the N8 measurement resources; wherein N5, N6, N7, or N8 is an integer greater than 0.

In some embodiments, the processor 400 is further used to read the program and execute the following steps:

if the L1-CLI measurement information carried in the first CSI report is RSSI, determining a first calculation delay predefined based on each Subcarrier Spacing (SCS);
or if the L1-CLI measurement information carried in the first CSI report is RSSI, determining the first calculation delay according to the CLI reporting capability of the terminal; wherein the first calculation delay is less than or equal to the calculation delay corresponding to L1-RSRP.

In some embodiments, the first calculation delay includes a third calculation delay and a fourth calculation delay; and the processor 400 is further used to read the program and execute the following steps: determining the third calculation delay and the fourth calculation delay predefined based on each SCS; wherein different SCSs have corresponding third calculation delay and fourth calculation delay respectively; the third calculation delay is a constant, or the third calculation delay is determined based on the fourth calculation delay, or the third calculation delay is determined based on the fourth calculation delay and the beamSwitchTiming reported by the terminal; the fourth calculation delay is a constant.

In some embodiments, the first calculation delay includes a third calculation delay and a fourth calculation delay; and the processor 400 is further used to read the program and execute the following steps:

determining the fourth calculation delay according to the CLI reporting capability corresponding to each SCS;
determining the third calculation delay based on the fourth calculation delay.

In some embodiments, the processor 400 is further used to read the program and execute the following steps:

if the L1-CLI measurement information carried in the first CSI report is RSRP, determining a predefined second calculation delay; or

if the L1-CLI measurement information carried in the first CSI report is RSRP, determining the second calculation delay according to the beamReportTiming reported by the terminal;

wherein the second calculation delay is less than or equal to the calculation delay corresponding to L1-RSRP.

In some embodiments, the second calculation delay includes a fifth calculation delay and a sixth calculation delay; and the processor 400 is further used to read the program and execute the following steps:

determining the fifth calculation delay and the sixth calculation delay corresponding to each predefined SCS; wherein the fifth calculation delay is a constant, or the fifth calculation delay is determined based on the sixth calculation delay; the sixth calculation delay is a constant.

In some embodiments, the second calculation delay includes a fifth calculation delay and a sixth calculation delay; and the processor 400 is further used to read the program and execute the following steps:

when $\mu=0$ or $\mu=1$, the fifth calculation delay is a constant; or when $\mu=2$ or $\mu=3$ or $\mu=5$ or $\mu=6$, determining the fifth calculation delay according to the beamReportTiming reported by the terminal;

determining the sixth calculation delay according to the beamReportTiming reported by the terminal; wherein $\mu$ represents Subcarrier Spacing (SCS).

In some embodiments, the processor 400 is further used to read the program and execute the following steps:

determining the fifth calculation delay based on the beamReportTiming reported by the terminal and a first capability; wherein the first capability is used to indicate the time interval between the moment when the terminal receives the DCI for triggering aperiodic L1-CLI reporting and the sending moment of the aperiodic reference signal.

It should be noted that the above-mentioned apparatus provided in the embodiments of the present disclosure can implement all the method steps implemented in the foregoing method embodiments and can achieve the same technical effects. The same parts and beneficial effects as those in the method embodiments are not described in detail herein.

As shown in FIG. 5, an information processing apparatus according to an embodiment of the present disclosure is applied to a terminal and includes: a first determining unit 501, used to determine one or more of the following pieces of information of the first Channel State Information (CSI) report: a priority value; report content; a calculation delay requirement; wherein the first CSI report carries measurement information of L1-CLI.

In some embodiments, the priority value of the first CSI report is less than the priority value of a second CSI report; or the priority value of the first CSI report is less than the priority value of a third CSI report and greater than the priority value of the second CSI report; wherein the second CSI report carries L1-RSRP or L1-SINR, and the third CSI report does not carry the measurement information of L1-CLI, L1-RSRP, or L1-SINR.

In some embodiments, the apparatus may further include a second determining unit, used to: determine the priority value according to L1-CLI configuration information of the network device; or determine the priority value according to the L1-CLI measurement capability reported by the terminal.

In some embodiments, the second determining unit is further used to: if L1-CLI configuration information configured by the network device through DCI is received, or L1-CLI configuration information configured by the network device through high-layer signaling is obtained, determine the priority value according to the first formula; wherein the first formula is expressed as:

$$\mathrm{Pri}_{\mathrm{iCSI}}(y, k, c, s) = 3 \cdot \mathrm{N}_{\mathrm{cells}} \cdot \mathrm{M}_{\mathrm{s}} \cdot y + \mathrm{N}_{\mathrm{cells}} \cdot \mathrm{M}_{\mathrm{s}} \cdot k + \mathrm{M}_{\mathrm{s}} \cdot c + s;$$

wherein, $\mathrm{Pri}_{\mathrm{iCSI}}(y, k, c, s)$ represents a priority value; c represents a serving cell index; s represents a report configuration ID (reportConfigID); $\mathrm{N}_{\mathrm{cells}}$ represents a value of a higher-layer configuration parameter maxNrofServingCells; $\mathrm{M}_{\mathrm{s}}$ represents a value of a higher-layer parameter maxNrofCSI-ReportConfigurations; *k*, y respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report

In some embodiments, the second determining unit is further used to: if the terminal reports that it supports L1-CLI measurement, determine the priority value according to the first formula; wherein the first formula is expressed as:

$$\mathrm{Pri}_{\mathrm{iCSI}}(y, k, c, s) = 3 \cdot \mathrm{N}_{\mathrm{cells}} \cdot \mathrm{M}_{\mathrm{s}} \cdot y + \mathrm{N}_{\mathrm{cells}} \cdot \mathrm{M}_{\mathrm{s}} \cdot k + \mathrm{M}_{\mathrm{s}} \cdot c + s;$$

wherein, $Pri_{iCSI}(y, k, c, s)$ represents a priority value; c represents a serving cell index; s represents a report configuration ID (reportConfigID); $N_{cells}$ represents a value of a higher-layer configuration parameter maxNrofServingCells; $M_s$ represents a value of a higher-layer parameter maxNrofCSI-ReportConfigurations; $k$, y respectively represent parameters; wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report

**In** some embodiments, the apparatus may further include a third determining unit, used to: determine the report content according to the type of L1-CLI measurement information included in the first CSI report; or determine the report content according to protocol specifications.

**In** some embodiments, the third determining unit is further used to:

if the L1-CLI measurement information carried in the first CSI report is RSSI, report the N1 measurement resources with the smallest interference and the measurement results on the N1 measurement resources, or report the first measurement resource among the N1 measurement resources with the smallest interference, the first measurement result on the first measurement resource, and the difference between the second measurement result and the first measurement result, where the first measurement result on the first measurement resource is the minimum value among the measurement results on the N1 measurement resources, and the second measurement result is the measurement result excluding the first measurement result among the measurement results on the N1 measurement resources; or

if the L1-CLI measurement information carried in the first CSI report is RSSI, report the N2 measurement resources and the measurement results on the N2 measurement resources, or report the first measurement resource among the N2 measurement resources, the first measurement result on the first measurement resource, and the difference between the second measurement result and the first measurement result, where the first measurement result on the first measurement resource is the minimum value among the measurement results on the N2 measurement resources, and the second measurement result is the measurement result excluding the first measurement result among the measurement results on the N2 measurement resources; or

if the L1-CLI measurement information carried in the first CSI report is RSRP, report the N3 measurement resources with the largest interference and the measurement results on the N3 measurement resources, or report the third measurement resource among the N3 measurement resources with the largest interference, the third measurement result on the third measurement resource, and the difference between the fourth measurement result and the third measurement result, where the third measurement result on the third measurement resource is the maximum value among the measurement results on the N3 measurement resources, and the fourth measurement result is the measurement result excluding the third measurement result among the measurement results on the N3 measurement resources; or

if the L1-CLI measurement information carried in the first CSI report is Reference Signal Received Power (RSRP), report the N4 measurement resources and the measurement results on the N4 measurement resources, or report the third measurement resource among the N4 measurement resources, the third measurement result on the third measurement resource, and the difference between the fourth measurement result and the third measurement result, where the third measurement result on the third measurement resource is the maximum value among the measurement results on the N4 measurement resources, and the fourth measurement result is the measurement result excluding the third measurement result among the measurement results on the N4 measurement resources; wherein N1, N2, N3, or N4 is an integer greater than 0.

In some embodiments, the third determining unit is further used to:

report the N5 measurement resources with the smallest interference and the measurement results on the N5 measurement resources, or report the first measurement resource among the N5 measurement resources with the smallest interference, the first measurement result on the first measurement resource, and the difference between the second measurement result and the first measurement result, where the first measurement result on the first measurement resource is the minimum value among the measurement results on the N5 measurement resources, and the second measurement result is the measurement result excluding the first measurement result among the measurement results on the N5 measurement resources; or

report the N6 measurement resources and the measurement results on the N6 measurement resources, or report the first measurement resource among the N6 measurement resources, the first measurement result on the first measurement resource, and the difference between the second measurement result and the first measurement result, where the first measurement result on the first measurement resource is the minimum value among the measurement results on the N6 measurement resources, and the second measurement result is the measurement result excluding the first measurement result among the measurement results on the N6 measurement resources; or

report the N7 measurement resources with the largest interference and the measurement results on the N7 measurement resources, or report the third measurement resource among the N7 measurement resources with the largest interference, the third measurement result on the third measurement resource, and the difference between the fourth measurement result and the third measurement result, where the third measurement result on the third measurement resource is the maximum value among the measurement results on the N7 measurement resources, and the fourth measurement result is the measurement result excluding the third measurement result among the measurement results on the N7 measurement resources; or

report the N8 measurement resources and the measurement results on the N8 measurement resources, or report the third measurement resource among the N8 measurement resources, the third measurement result on the third measurement resource, and the difference between the fourth measurement result and the third measurement result, where the third measurement result on the third measurement resource is the maximum value among the measurement results on the N8 measurement resources, and the fourth measurement result is the measurement result excluding the third measurement result among the measurement results on the N8 measurement resources;

wherein N5, N6, N7, or N8 is an integer greater than 0.

In some embodiments, the apparatus may further include a fourth determining unit, used to:

if the L1-CLI measurement information carried in the first CSI report is RSSI, determine a first calculation delay predefined based on each Subcarrier Spacing (SCS); or

if the L1-CLI measurement information carried in the first CSI report is RSSI, determine the first calculation delay according to the CLI reporting capability of the terminal;

wherein the first calculation delay is less than or equal to the calculation delay corresponding to L1-RSRP.

In some embodiments, the first calculation delay includes a third calculation delay and a fourth calculation delay; and the fourth determining unit is further used to: determine the third calculation delay and the fourth calculation delay predefined based on each SCS; wherein different SCSs have corresponding third calculation delay and fourth calculation delay respectively; the third calculation delay is a constant, or the third calculation delay is determined based on the fourth calculation delay, or the third calculation delay is determined based on the fourth calculation delay and the beamSwitchTiming reported by the terminal; the fourth calculation delay is a constant.

In some embodiments, the first calculation delay includes a third calculation delay and a fourth calculation delay; and the fourth determining unit is further used to: determine the fourth calculation delay according to the CLI reporting capability corresponding to each SCS; determine the third calculation delay based on the fourth calculation delay.

In some embodiments, the fourth determining unit is further used to: if the L1-CLI measurement information carried in the first CSI report is RSRP, determine a predefined second calculation delay; or if the L1-CLI measurement information carried in the first CSI report is RSRP, determine the second calculation delay according to the beamReportTiming reported by the terminal; wherein the second calculation delay is less than or equal to the calculation delay corresponding to L1-RSRP.

In some embodiments, the second calculation delay includes a fifth calculation delay and a sixth calculation delay; and the fourth determining unit is further used to: determine the fifth calculation delay and the sixth calculation delay corresponding to each predefined SCS; wherein the fifth calculation delay is a constant, or the fifth calculation delay is determined based on the sixth calculation delay; the sixth calculation delay is a constant.

In some embodiments, the second calculation delay includes a fifth calculation delay and a sixth calculation delay; and the fourth determining unit is further used to: when $\mu=0$ or $\mu=1$, the fifth calculation delay is a constant; or when $\mu=2$ or $\mu=3$ or $\mu=5$ or $\mu=6$, determine the fifth calculation delay according to the beamReportTiming reported by the terminal; determine the sixth calculation delay according to the beamReportTiming reported by the terminal; wherein $\mu$ represents Subcarrier Spacing (SCS).

In some embodiments, the fourth determining unit is further used to: determine the fifth calculation delay based on the beamReportTiming reported by the terminal and a first capability; wherein the first capability is used to indicate the time interval between the moment when the terminal receives the DCI for triggering aperiodic L1-CLI reporting and the sending moment of the aperiodic reference signal.

It should be noted that the above-mentioned apparatus provided in the embodiments of the present disclosure can implement all the method steps implemented in the foregoing method embodiments and can achieve the same technical effects. The same parts and beneficial effects as those in the method embodiments are not described in detail herein.

As shown in FIG. 6, an information processing apparatus according to an embodiment of the present disclosure is applied to a network device and includes:

a first determining unit 601, used to determine information of a first CSI report, where the first CSI report carries measurement information of L1-CLI; and a first processing unit 602, used to perform processing according to the information; wherein the information includes one or more of the following: a priority value; report content; a calculation delay requirement.

In some embodiments, the priority value of the first CSI report is less than the priority value of a second CSI report; or the priority value of the first CSI report is less than the priority value of a third CSI report and greater than the priority value of the second CSI report; wherein the second CSI report carries L1-RSRP or L1-SINR, and the third CSI report does not carry the measurement information of L1-CLI, L1-RSRP, or L1-SINR.

In some embodiments, the apparatus may further include a second determining unit, used to: determine the priority value according to L1-CLI configuration information of the terminal; or determine the priority value according to the L1-CLI measurement capability reported by the terminal.

In some embodiments, the second determining unit is further used to: if L1-CLI configuration information is sent to the terminal through DCI or L1-CLI configuration information is configured for the terminal through high-layer signaling, determine the priority value according to the first formula; wherein the first formula is expressed as:

$$\text{Pri}_{\text{iCSI}}(y, k, c, s) = 3 \cdot N_{\text{cells}} \cdot M_s \cdot y + N_{\text{cells}} \cdot M_s \cdot k + M_s \cdot c + s;$$

wherein, $\text{Pri}_{\text{iCSI}}(y, k, c, s)$ represents a priority value; c represents a serving cell index; s represents a report configuration ID (reportConfigID); $N_{\text{cells}}$ represents a value of a higher-layer configuration parameter maxNrofServingCells; $M_s$ represents a value of a higher-layer parameter maxNrofCSI-ReportConfigurations; $k$, y respectively represent parameters;

wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report

In some embodiments, the second determining unit is further used to: if the terminal reports that it supports L1-CLI measurement, determine the priority value according to the first formula; wherein the first formula is expressed as:

$$\text{Pri}_{\text{iCSI}}(y, k, c, s) = 3 \cdot N_{\text{cells}} \cdot M_s \cdot y + N_{\text{cells}} \cdot M_s \cdot k + M_s \cdot c + s;$$

wherein, $\text{Pri}_{\text{iCSI}}(y, k, c, s)$ represents a priority value; c represents a serving cell index; s represents a report configuration ID (reportConfigID); $N_{\text{cells}}$ represents a value of a higher-layer configuration parameter maxNrofServingCells; $M_s$ represents a value of a higher-layer parameter maxNrofCSI-ReportConfigurations; $k$, y respectively represent parameters;

wherein k = 0 corresponds to the first CSI report, k = 1 corresponds to the second CSI report, and k = 2 corresponds to the third CSI report; or k = 1 corresponds to the first CSI report, k = 0 corresponds to the second CSI report, and k = 2 corresponds to the third CSI report.

In some embodiments, the apparatus may further include a third determining unit, used to: determine the report content according to the type of L1-CLI measurement information included in the first CSI report; or determine the report content according to protocol specifications.

In some embodiments, the third determining unit is further used to: if the L1-CLI measurement information carried in the first CSI report is RSSI, determine the report content as: the N1 measurement resources with the smallest interference and the measurement results on the N1 measurement resources, or the first measurement resource among the N1 measurement resources with the smallest interference, the first measurement result on the first measurement resource, and the difference between the second measurement result and the first measurement result, where the first measurement result on the first measurement resource is the minimum value among the measurement results on the N1 measurement resources, and the second measurement result is the measurement result excluding the first measurement result among the measurement results on the N1 measurement resources; or the N2 measurement resources and the measurement results on the N2 measurement resources, or the first measurement resource among the N2 measurement resources, the first measurement result on the first measurement resource, and the difference between the second measurement result and the first measurement result, where the first measurement result on the first measurement resource is the minimum value among the measurement results on the N2 measurement resources, and the second measurement result is the measurement result excluding the first measurement result among the measurement results on the N2 measurement resources;

or, if the L1-CLI measurement information carried in the first CSI report is RSRP, determine the report content as: the N3 measurement resources with the largest interference and the measurement results on the N3 measurement resources, or the third measurement resource among the N3 measurement resources with the largest interference, the third measurement result on the third measurement resource, and the difference between the fourth measurement result and the third measurement result, where the third measurement result on the third measurement resource is the maximum value among the measurement results on the N3 measurement resources, and the fourth measurement result is the measurement result excluding the third measurement result among the measurement results on the N3 measurement resources; or the N4 measurement resources and the measurement results on the N4 measurement resources, or the third measurement resource among the N4 measurement resources, the third measurement result on the third measurement resource, and the difference between the fourth measurement result and the third measurement result, where the third measurement result on the third measurement resource is the maximum value among the measurement results on the N4 measurement resources, and the fourth measurement result is the measurement result excluding the third measurement result among the measurement results on the N4 measurement resources; wherein N1, N2, N3, or N4 is an integer greater than 0.

In some embodiments, the third determining unit is further used to: determine the report content as: the N5 measurement resources with the smallest interference and the measurement results on the N5 measurement resources, or the first measurement resource among the N5 measurement resources with the smallest interference, the first measurement result on the first measurement resource, and the difference between the second measurement result and the first measurement result, where the first measurement result on the first measurement resource is the minimum value among the measurement results on the N5 measurement resources, and the second measurement result is the measurement result excluding the first measurement result among the measurement results on the N5 measurement resources;

or, determine the report content as: the N6 measurement resources and the measurement results on the N6 measurement resources, or the first measurement resource among the N6 measurement resources, the first measurement result on the first measurement resource, and the difference between the second measurement result and the first measurement result, where the first measurement result on the first measurement resource is the minimum value among the measurement results on the N6 measurement resources, and the second measurement result is the measurement result excluding the first measurement result among the measurement results on the N6 measurement resources;

or, determine the report content as: the N7 measurement resources with the largest interference and the measurement results on the N7 measurement resources, or the third measurement resource among the N7 measurement resources with the largest interference, the third measurement result on the third measurement resource, and the difference between the fourth measurement result and the third measurement result, where the third measurement result on the third measurement resource is the maximum value among the measurement results on the N7 measurement resources, and the fourth measurement result is the measurement result excluding the third measurement result among the measurement results on the N7 measurement resources;

or, determine the report content as: the N8 measurement resources and the measurement results on the N8 measurement resources, or the third measurement resource among the N8 measurement resources, the third measurement result on the third measurement resource, and the difference between the fourth measurement result and the third measurement result, where the third measurement result on the third measurement resource is the maximum value among the measurement results on the N8 measurement resources, and the fourth measurement result is the measurement result excluding the third measurement result among the measurement results on the N8 measurement resources; wherein N5, N6, N7, or N8 is an integer greater than 0.

In some embodiments, the apparatus may further include a fourth determining unit, used to:
if the L1-CLI measurement information carried in the first CSI report is RSSI, determine a first calculation delay predefined based on each SCS; or if the L1-CLI measurement information carried in the first CSI report is RSSI, determine the first calculation delay according to the CLI reporting capability of the terminal; wherein the first calculation delay is less than or equal to the calculation delay corresponding to L1-RSRP.

In some embodiments, the first calculation delay includes a third calculation delay and a fourth calculation delay, and the fourth determining unit is further used to: determine the third calculation delay and the fourth calculation delay predefined based on each SCS; wherein different SCSs have corresponding third calculation delay and fourth calculation delay respectively; the third calculation delay is a constant, or the third calculation delay is determined based on the fourth calculation delay, or the third calculation delay is determined based on the fourth calculation delay and the beamSwitch-Timing reported by the terminal; the fourth calculation delay is a constant.

In some embodiments, the first calculation delay includes a third calculation delay and a fourth calculation delay, and the fourth determining unit is further used to: determine the fourth calculation delay according to the CLI reporting capability corresponding to each SCS; determine the third calculation delay based on the fourth calculation delay.

In some embodiments, the apparatus may further include a fifth determining unit, used to: if the L1-CLI measurement information carried in the first CSI report is RSRP, determine a predefined second calculation delay; or

if the L1-CLI measurement information carried in the first CSI report is RSRP, determine the second calculation delay according to the beamReportTiming reported by the terminal; wherein the second calculation delay is less than or equal to the calculation delay corresponding to L1-RSRP.

**In** some embodiments, the second calculation delay includes a fifth calculation delay and a sixth calculation delay; and the fifth determining unit is used to: determine the fifth calculation delay and the sixth calculation delay corresponding to each predefined SCS;

wherein the fifth calculation delay is a constant, or the fifth calculation delay is determined based on the sixth calculation delay; the sixth calculation delay is a constant.

**In** some embodiments, the second calculation delay includes a fifth calculation delay and a sixth calculation delay; and the fifth determining unit is used to: when $\mu$=0 or $\mu$=1, the fifth calculation delay is a constant; or when $\mu$=2 or $\mu$=3 or $\mu$=5 or $\mu$=6, determine the fifth calculation delay according to the beamReportTiming reported by the terminal; determine the sixth calculation delay according to the beamReportTiming reported by the terminal; wherein $\mu$ represents Subcarrier Spacing (SCS).

**In** some embodiments, the fifth determining unit is further used to: determine the fifth calculation delay based on the beamReportTiming reported by the terminal and a first capability; wherein the first capability is used to indicate the time interval between the moment when the terminal receives the DCI for triggering aperiodic L1-CLI reporting and the sending moment of the aperiodic reference signal.

**It** should be noted that the above-mentioned apparatus provided in the embodiments of the present disclosure can implement all the method steps implemented in the foregoing method embodiments and can achieve the same technical effects. The same parts and beneficial effects as those in the method embodiments are not described in detail herein.

**It** should be noted that the division of units in the embodiments of the present disclosure is schematic and merely a logical function division. There may be another division manner during actual implementation. In addition, functional units in the embodiments of the present disclosure may be integrated into one processing unit, or each unit may exist alone physically, or two or more units may be integrated into one unit. The integrated unit may be implemented in the form of hardware or in the form of a software functional unit.

When the integrated unit is implemented in the form of a software functional unit and sold or used as an independent product, it may be stored in a processor-readable storage medium. Based on this understanding, the technical solution of the present disclosure essentially, or the part contributing to the related art, or all or part of the technical solution may be embodied in the form of a software product. The computer software product is stored in a storage medium and includes several instructions for enabling a computer device (which may be a personal computer, a server, a network device, or the like) or a processor to execute all or part of the steps of the method described in the embodiments of the present disclosure. The foregoing storage medium includes various media capable of storing program codes, such as a USB flash drive, a removable hard disk, a Read-Only Memory (ROM), a Random Access Memory (RAM), a magnetic disk, or an optical disk.

An embodiment of the present disclosure further provides a communication device, including a memory, a processor, and a program stored in the memory and executable on the processor. When the processor executes the program, the steps in the above-mentioned information processing method are implemented.

An embodiment of the present disclosure further provides a processor-readable storage medium, where a program is stored on the readable storage medium. When the program is executed by a processor, the processes of the above-mentioned information processing method embodiments are implemented, and the same technical effects can be achieved. To avoid repetition, details are not described herein again. The readable storage medium may be any available medium or data storage device accessible to a processor, including but not limited to a magnetic memory (e.g., a floppy disk, a hard disk, a magnetic tape, a Magneto-Optical (MO) disk, etc.), an optical memory (e.g., a Compact Disc (CD), a Digital Video Disc (DVD), a Blu-ray Disc (BD), a High-Definition Versatile Disc (HVD), etc.), and a semiconductor memory (e.g., a Read-Only Memory (ROM), an Erasable Programmable Read-Only Memory (EPROM), an Electrically Erasable Programmable Read-Only Memory (EEPROM), a Non-Volatile Memory (NAND FLASH), a Solid State Disk (SSD), etc.).

It should be noted that, in this specification, the terms "include", "comprise", or any of their other variations are intended to cover a non-exclusive inclusion, such that a process, method, article, or apparatus that includes a series of elements not only includes those elements but also includes other elements not expressly listed, or further includes elements inherent to such a process, method, article, or apparatus. Without further limitations, an element defined by the phrase "including a..." does not preclude the presence of additional identical elements in the process, method, article, or apparatus that includes the element.

Through the description of the above embodiments, those skilled in the art can clearly understand that the method in the above embodiments can be implemented by means of software plus a necessary universal hardware platform, and certainly can also be implemented by hardware. However, in many cases, the former is a better implementation. Based on such understanding, the technical solution of the present disclosure essentially, or the part contributing to the related art, may be embodied in the form of a software product. The computer software product is stored in a storage medium (e.g., a ROM/RAM, a magnetic disk, an optical disk) and includes several instructions for enabling a terminal (which may be a mobile phone, a computer, a server, an air conditioner, a network device, etc.) to execute the method described in the embodiments of the present disclosure.

It should be noted that it should be understood that the division of the above modules is only a division of logical functions, and in actual implementation, all or part of the modules may be integrated into one physical entity, or may be physically separated. In addition, the modules may be implemented in the form of software invoked by a processing element; or may be implemented in the form of hardware; or some modules may be implemented in the form of invoking software by a processing element, and some modules may be implemented in the form of hardware. For example, the determining module may be a separately provided processing element, or may be integrated into a chip of the above apparatus. In addition, the determining module may also be stored in the memory of the above apparatus in the form of program code, and the function of the determining module is invoked and executed by a processing element of the above apparatus. The implementation of other modules is similar to that of the determining module. In addition, all or part of these modules may be integrated together, or may be implemented independently. The processing element described herein may be an integrated circuit with signal processing capabilities. During implementation, the steps of the above method or the above modules may be completed by an integrated logic circuit of hardware in the processing element or an instruction in the form of software.

For example, each module, unit, subunit, or submodule may be one or more integrated circuits used to implement the above method, such as one or more Application-Specific Integrated Circuits (ASICs), one or more Digital Signal Processors (DSPs), or one or more Field-Programmable Gate Arrays (FPGAs). For another example, when the above module is implemented in the form of scheduling program code by a processing element, the processing element may be a general-purpose processor, such as a Central Processing Unit (CPU) or another processor capable of invoking program code. For another example, the modules may be integrated together and implemented in the form of a System-on-a-Chip (SOC).

The terms "first", "second", and the like in the specification and claims of the present disclosure are used to distinguish similar objects, and are not necessarily used to describe a specific order or sequence. It should be understood that the data used in this way can be interchanged under appropriate circumstances, so that the embodiments of the present disclosure described herein can be implemented in an order other than those illustrated or described herein. In addition, the terms "include" and "have" and any variations thereof are intended to cover non-exclusive inclusions. For example, a process, method, system, product, or apparatus that includes a series of steps or units is not necessarily limited to the clearly listed steps or units, but may include other steps or units not clearly listed or inherent to the process, method, product, or apparatus. In addition, the use of "and/or" in the specification and claims indicates at least one of the connected objects. For example, "A and/or B and/or C" indicates seven cases: A alone, B alone, C alone, both A and B, both B and C, both A and C, and both A, B, and C. Similarly, the use of "at least one of A and B" in the specification and claims should be understood as "A alone, B alone, or both A and B".

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

**Claims**

1. An information processing method applied to a terminal, comprising:
   determining one or more of following pieces of information of a first Channel State Information (CSI) report:

   a priority value;
   report content;
   a calculation delay requirement;
   wherein the first CSI report carries measurement information of Layer 1 Cross-Link Interference (L1-CLI).

2. The method according to claim 1, wherein,

   a priority value of the first CSI report is less than a priority value of the second CSI report; or
   a priority value of the first CSI report is less than a priority value of the third CSI report and greater than a priority value of the second CSI report;
   wherein the second CSI report carries Layer-1 Reference Signal Received Power (L1-RSRP) or Layer-1 Signal to Noise and Interference Ratio (L1-SINR), and the third CSI report does not carry the measurement information of L1-CLI, L1-RSRP, or L1-SINR.

3. The method according to claim 1 or 2, wherein determining the priority value of the first CSI report comprises:

determining the priority value according to L1-CLI configuration information of a network device; or
determining the priority value according to L1-CLI measurement capability reported by the terminal.

4. The method according to claim 3, wherein, determining the priority value according to the L1-CLI configuration information of the network device comprises:

if the L1-CLI configuration information configured by the network device through Downlink Control Information (DCI) is received, or the L1-CLI configuration information configured by the network device through higher-layer signaling is obtained, determining the priority value according to a first formula;
wherein the first formula is expressed as:

$$\text{Pri}_{iCSI}(y, k, c, s) = 3 \cdot N_{cells} \cdot M_s \cdot y + N_{cells} \cdot M_s \cdot k + M_s \cdot c + s;$$

wherein, $\text{Pri}_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; k and y respectively represent parameters;
wherein k = 0 corresponds to the first CSI report, k = 1 corresponds to the second CSI report, and k = 2 corresponds to the third CSI report; or
k = 1 corresponds to the first CSI report, k = 0 corresponds to the second CSI report, and k = 2 corresponds to the third CSI report.

5. The method according to claim 3, wherein, determining the priority value according to the L1-CLI measurement capability reported by the terminal comprises:

if the terminal reports support for L1-CLI measurement, determining the priority value according to a first formula;
wherein the first formula is expressed as:

$$\text{Pri}_{iCSI}(y, k, c, s) = 3 \cdot N_{cells} \cdot M_s \cdot y + N_{cells} \cdot M_s \cdot k + M_s \cdot c + s;$$

wherein, $\text{Pri}_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; $k$, y respectively represent parameters;
wherein k = 0 corresponds to the first CSI report, k = 1 corresponds to the second CSI report, and k = 2 corresponds to the third CSI report; or
k = 1 corresponds to the first CSI report, k = 0 corresponds to the second CSI report, and k = 2 corresponds to the third CSI report.

6. The method according to claim 1, wherein determining the report content of the first CSI report comprises one or more of the following:

determining the report content according to a type of L1-CLI measurement information comprised in the first CSI report; or
determining the report content according to a protocol specification.

7. The method according to claim 6, wherein, determining the report content according to the type of L1-CLI measurement information comprised in the first CSI report comprises:

if the L1-CLI measurement information carried in the first CSI report is a Received Signal Strength Indicator (RSSI), reporting N1 measurement resources with smallest interference and measurement results on the N1 measurement resources; or reporting a first measurement resource among the N1 measurement resources with the smallest interference, the first measurement result on the first measurement resource, and difference between the second measurement result and the first measurement result, wherein the first measurement result on the first measurement resource is a minimum value among the measurement results on the N1 measurement resources, and the second measurement result is a measurement result, excluding the first measurement result, among the measurement results on the N1 measurement resources; or

if the L1-CLI measurement information carried in the first CSI report is an RSSI, reporting N2 measurement resources and measurement results on the N2 measurement resources; or reporting the first measurement resource among the N2 measurement resources, the first measurement result on the first measurement resource, and difference between the second measurement result and the first measurement result, wherein the first measurement result on the first measurement resource is a minimum value among the measurement results on the N2 measurement resources, and the second measurement result is a measurement result, excluding the first measurement result, among the measurement results on the N2 measurement resources; or

if the L1-CLI measurement information carried in the first CSI report is Reference Signal Received Power (RSRP), reporting N3 measurement resources with largest interference and measurement results on the N3 measurement resources; or reporting a third measurement resource among the N3 measurement resources with the largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result, excluding the third measurement result, among the measurement results on the N3 measurement resources; or

if the L1-CLI measurement information carried in the first CSI report is Reference Signal Received Power (RSRP), reporting N4 measurement resources and measurement results on the N4 measurement resources; or reporting a third measurement resource among the N4 measurement resources, a third measurement result on the third measurement resource, and difference between the fourth measurement result and the third measurement result, wherein the third measurement result on the third measurement resource is a maximum value among the measurement results on the N4 measurement resources, and the fourth measurement result is a measurement result, excluding the third measurement result, among the measurement results on the N4 measurement resources;

wherein, N1, N2, N3, or N4 is an integer greater than 0.

8. The method according to claim 6, wherein, determining the report content according to the protocol specification comprises:

reporting N5 measurement resources with a smallest interference and measurement results on the N5 measurement resources; or reporting a first measurement resource among the N5 measurement resources with smallest interference, a first measurement result on the first measurement resource, and difference between a second measurement result and the first measurement result, wherein the first measurement result on the first measurement resource is a minimum value among the measurement results on the N5 measurement resources, and the second measurement result is a measurement result, excluding the first measurement result, among the measurement results on the N5 measurement resources; or

reporting N6 measurement resources and measurement results on the N6 measurement resources; or reporting a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result, excluding the first measurement result, among the measurement results on the N6 measurement resources; or

reporting N7 measurement resources with largest interference and measurement results on the N7 measurement resources; or reporting a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources; or

reporting N8 measurement resources and measurement results on the N8 measurement resources; or reporting a third measurement resource among the N8 measurement resources, a third measurement result on the third measurement resource, and difference between the fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources;

wherein, N5, N6, N7, or N8 is an integer greater than 0.

9. The method according to claim 1, wherein determining the calculation delay comprises:

if the first CSI report carries L1-CLI measurement information as an RSSI, determining a first calculation delay predefined based on each Subcarrier Spacing (SCS); or
if the first CSI report carries L1-CLI measurement information as an RSSI, determining the first calculation delay according to the CLI reporting capability of the terminal;
wherein, the first calculation delay is less than or equal to a calculation delay corresponding to L1-RSRP.

10. The method according to claim 9, wherein the first calculation delay comprises a third calculation delay and a fourth calculation delay;
determining the first calculation delay predefined based on each Subcarrier Spacing (SCS) comprises:

determining a third calculation delay and a fourth calculation delay predefined based on each SCS;
wherein, different SCSs have corresponding third calculation delay and fourth calculation delay respectively;
the third calculation delay is a constant, or the third calculation delay is determined based on the fourth calculation delay, or the third calculation delay is determined based on the fourth calculation delay and the beamSwitchTiming reported by the terminal;
the fourth calculation delay is a constant.

11. The method according to claim 9, wherein the first calculation delay comprises a third calculation delay and a fourth calculation delay;
determining the first calculation delay according to the CLI reporting capability of the terminal comprises:

determining the fourth calculation delay according to the CLI reporting capability corresponding to each SCS; and
determining the third calculation delay based on the fourth calculation delay.

12. The method according to claim 1, wherein determining the calculation delay comprises:

if the L1-CLI measurement information carried in the first CSI report is RSRP: determining a predefined second calculation delay; or
if the L1-CLI measurement information carried in the first CSI report is RSRP: determining the second calculation delay according to the beamReportTiming reported by the terminal;
wherein, the second calculation delay is less than or equal to the calculation delay corresponding to L1-RSRP.

13. The method according to claim 12, wherein the second calculation delay comprises a fifth calculation delay and a sixth calculation delay;
determining a predefined second calculation delay comprises:

determining a fifth calculation delay and a sixth calculation delay corresponding to each predefined SCS;
wherein, the fifth calculation delay is a constant, or the fifth calculation delay is determined based on the sixth calculation delay; the sixth calculation delay is a constant.

14. The method according to claim 12, wherein the second calculation delay comprises a fifth calculation delay and a sixth calculation delay;
determining the second calculation delay based on the beamReportTiming reported by the terminal comprises:

when $\mu = 0$ or $\mu = 1$, the fifth calculation delay is a constant; or when $\mu = 2$ or $\mu = 3$ or $\mu = 5$ or $\mu = 6$, determining the fifth calculation delay according to the beamReportTiming reported by the terminal; and
determining the sixth calculation delay according to the beamReportTiming reported by the terminal;
wherein, $\mu$ represents Subcarrier Spacing (SCS).

15. The method according to claim 14, wherein, determining the fifth calculation delay according to the beamReportTiming reported by the terminal comprises:

determining the fifth calculation delay based on the beamReportTiming and the first capability reported by the terminal;

wherein, the first capability is used to indicate a time interval between a moment when the terminal receives a DCI for triggering aperiodic L1-CLI reporting and a sending moment of an aperiodic reference signal.

16. An information processing method applied to a network device, comprising:

determining information of a first CSI report, where the first CSI report carries measurement information of L1-CLI;
processing according to the information;
the information comprises one or more of following pieces of information:

 a priority value;
 report content;
 a calculation delay requirement.

17. The method according to claim 16, wherein,

a priority value of the first CSI report is less than a priority value of the second CSI report; or
a priority value of the first CSI report is less than a priority value of the third CSI report and greater than a priority value of the second CSI report;
wherein the second CSI report carries L1-RSRP or L1-SINR, and the third CSI report does not carry the measurement information of L1-CLI, L1-RSRP, or L1-SINR.

18. The method according to claim 16 or 17, wherein determining the priority value of the first CSI report comprises:

determining the priority value according to L1-CLI configuration information of the terminal; or
determining the priority value according to the L1-CLI measurement capability reported by the terminal.

19. The method according to claim 18, wherein, determining the priority value according to L1-CLI configuration information of the terminal comprises:

if the L1-CLI configuration information is sent to the terminal via a DCI or the L1-CLI configuration information is configured for the terminal via higher-layer signaling, determining the priority value according to a first formula; wherein the first formula is expressed as:

$$\mathrm{Pri}_{iCSI}(y, k, c, s) = 3 \cdot N_{cells} \cdot M_s \cdot y + N_{cells} \cdot M_s \cdot k + M_s \cdot c + s;$$

wherein, $\mathrm{Pri}_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; k and y respectively represent parameters;
wherein k = 0 corresponds to the first CSI report, k = 1 corresponds to the second CSI report, and k = 2 corresponds to the third CSI report; or
k = 1 corresponds to the first CSI report, k = 0 corresponds to the second CSI report, and k = 2 corresponds to the third CSI report.

20. The method according to claim 18, wherein, determining the priority value according to the L1-CLI measurement capability reported by the terminal comprises:

if the terminal reports support for L1-CLI measurement, determining the priority value according to a first formula; wherein the first formula is expressed as:

$$\mathrm{Pri}_{iCSI}(y, k, c, s) = 3 \cdot N_{cells} \cdot M_s \cdot y + N_{cells} \cdot M_s \cdot k + M_s \cdot c + s;$$

wherein, $\mathrm{Pri}_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; $k$, y respectively represent parameters;
wherein k = 0 corresponds to the first CSI report, k = 1 corresponds to the second CSI report, and k = 2 corresponds to the third CSI report; or

k = 1 corresponds to the first CSI report, k = 0 corresponds to the second CSI report, and k = 2 corresponds to the third CSI report.

21. The method according to claim 16, wherein determining the report content of the first CSI comprises one or more of the following:

determining the report content according to a type of L1-CLI measurement information comprised in the first CSI report; or

determining the report content according to a protocol specification.

22. The method according to claim 21, wherein, determining the report content according to the type of L1-CLI measurement information comprised in the first CSI report comprises:

if the L1-CLI measurement information carried in the first CSI report is an RSSI, determining the report content to be N1 measurement resources with smallest interference and measurement results on the N1 measurement resources; or a first measurement resource among the N1 measurement resources with smallest interference, a first measurement result on the first measurement resource, and difference between the second measurement result and the first measurement result, wherein the first measurement result on the first measurement resource is a minimum value among the measurement results on the N1 measurement resources, and the second measurement result is a measurement result excluding the first measurement result among the measurement results on the N1 measurement resources; or N2 measurement resources and measurement results on the N2 measurement resources; or a first measurement resource among the N2 measurement resources, a first measurement result on the first measurement resource, and difference between the second measurement result and the first measurement result, wherein the first measurement result on the first measurement resource is a minimum value among the measurement results on the N2 measurement resources, and the second measurement result is a measurement result excluding the first measurement result among the measurement results on the N2 measurement resources; or

if the L1-CLI measurement information carried in the first CSI report is RSRP: determining the report content to be: N3 measurement resources with largest interference and measurement results on the N3 measurement resources; or a third measurement resource among the N3 measurement resources with largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result excluding the third measurement result among the measurement results on the N3 measurement resources; or N4 measurement resources and measurement results on the N4 measurement resources; or a third measurement resource among the N4 measurement resources, a third measurement result on the third measurement resource, and difference between the fourth measurement result and the third measurement result, wherein the third measurement result on the third measurement resource is a maximum value among measurement results on the N4 measurement resources, and the fourth measurement result is a measurement result excluding the third measurement result among the measurement results on the N4 measurement resources;

wherein, N1, N2, N3, or N4 is an integer greater than 0.

23. The method according to claim 21, wherein, determining the report content according to the protocol specification comprises one or more of the following:

determining the report content to be: N5 measurement resources with smallest interference and measurement results on the N5 measurement resources; or a first measurement resource among the N5 measurement resources with smallest interference, a first measurement result on the first measurement resource, and difference between the second measurement result and the first measurement result, wherein the first measurement result on the first measurement resource is a minimum value among the measurement results on the N5 measurement resources, and the second measurement result is a measurement result excluding the first measurement result among the measurement results on the N5 measurement resources; or

determining the report content to be: N6 measurement resources and measurement results on the N6 measurement resources; or a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result excluding the first measurement result among the measurement results on the N6 measurement resources; or

determining the report content to be: N7 measurement resources with largest interference and measurement results on the N7 measurement resources; or a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources); or

determining the report content to be: N8 measurement resources and measurement results on the N8 measurement resources; or a third measurement resource among the N8 measurement resources, a third measurement result on the third measurement resource, and difference between a fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources;

wherein, N5, N6, N7, or N8 is an integer greater than 0.

24. The method according to claim 16, wherein determining the calculation delay comprises:

if the first CSI report carries L1-CLI measurement information as an RSSI: determining a first calculation delay predefined based on each SCS; or

if the first CSI report carries L1-CLI measurement information as an RSSI: determining the first calculation delay according to the CLI reporting capability of the terminal;

wherein, the first calculation delay is less than or equal to the calculation delay corresponding to L1-RSRP.

25. The method according to claim 24, wherein the first calculation delay comprises a third calculation delay and a fourth calculation delay;

determining the first calculation delay predefined based on each Subcarrier Spacing (SCS) comprises:

determining a third calculation delay and a fourth calculation delay predefined based on each SCS;

wherein, different SCSs have corresponding third calculation delay and fourth calculation delay respectively;

the third calculation delay is a constant, or the third calculation delay is determined based on the fourth calculation delay, or the third calculation delay is determined based on the fourth calculation delay and the beamSwitchTiming reported by the terminal;

the fourth calculation delay is a constant.

26. The method according to claim 24, wherein the first calculation delay comprises a third calculation delay and a fourth calculation delay;

determining the first calculation delay based on the CLI reporting capability of the terminal comprises:

determining the fourth calculation delay according to the CLI reporting capability corresponding to each SCS; and determining the third calculation delay based on the fourth calculation delay.

27. The method according to claim 16, wherein determining the calculation delay comprises:

if the L1-CLI measurement information carried in the first CSI report is RSRP: determining a predefined second calculation delay; or

if the L1-CLI measurement information carried in the first CSI report is RSRP: determining the second calculation delay according to the beamReportTiming reported by the terminal;

wherein, the second calculation delay is less than or equal to the calculation delay corresponding to L1-RSRP.

28. The method according to claim 27, wherein the second calculation delay comprises a fifth calculation delay and a sixth calculation delay;

determining the predefined second calculation delay comprises:

determining a fifth calculation delay and a sixth calculation delay corresponding to each predefined SCS;

wherein, the fifth calculation delay is a constant, or the fifth calculation delay is determined based on the sixth calculation delay;

the sixth calculation delay is a constant.

29. The method according to claim 27, wherein the second calculation delay comprises a fifth calculation delay and a sixth calculation delay;

determining the second calculation delay based on the beamReportTiming reported by the terminal comprises:

when $\mu = 0$ or $\mu = 1$, the fifth calculation delay is a constant; or when $\mu = 2$ or $\mu = 3$ or $\mu = 5$ or $\mu = 6$, determining the fifth calculation delay according to the beamReportTiming reported by the terminal; and

determining the sixth calculation delay according to the beamReportTiming reported by the terminal;

wherein, $\mu$ represents Subcarrier Spacing (SCS).

30. The method according to claim 29, wherein, determining the fifth calculation delay according to the beamReportTiming reported by the terminal comprises:

determining the fifth calculation delay based on the beamReportTiming and the first capability reported by the terminal;

wherein, the first capability is used to indicate a time interval between a moment when the terminal receives the DCI for triggering aperiodic L1-CLI reporting and a sending moment of an aperiodic reference signal.

31. An information processing apparatus, applied to a terminal, comprising:

a memory, a transceiver, and a processor;

wherein the memory is used to store a computer program;

the transceiver is used to send and receive data under the control of the processor;

the processor is used to read the computer program in the memory and perform the following operations:

determining one or more of the following pieces of information of a first CSI report:

a priority value;

report content;

a calculation delay requirement;

wherein the first CSI report carries measurement information of L1-CLI.

32. The apparatus according to claim 31, wherein,

a priority value of the first CSI report is less than a priority value of the second CSI report; or

a priority value of the first CSI report is less than a priority value of the third CSI report and greater than a priority value of the second CSI report;

wherein the second CSI report carries L1-RSRP or L1-SINR, and the third CSI report does not carry the measurement information of L1-CLI, L1-RSRP, or L1-SINR.

33. The apparatus according to claim 31 or 32, wherein the processor is further used to read the computer program in the memory and perform the following operations:

determining the priority value according to L1-CLI configuration information of the network device; or

determining the priority value according to L1-CLI measurement capability reported by the terminal.

34. The apparatus according to claim 33, wherein the processor is further used to read the computer program in the memory and perform the following operations:

if the L1-CLI configuration information configured by the network device through Downlink Control Information (DCI) is received, or the L1-CLI configuration information configured by the network device through higher-layer signaling is obtained, determining the priority value according to a first formula;

wherein the first formula is expressed as:

$$\text{Pri}_{iCSI}(y, k, c, s) = 3 \cdot N_{cells} \cdot M_s \cdot y + N_{cells} \cdot M_s \cdot k + M_s \cdot c + s;$$

wherein, $Pri_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; k and y respectively represent parameters;

wherein k = 0 corresponds to the first CSI report, k = 1 corresponds to the second CSI report, and k = 2 corresponds to the third CSI report; or

k = 1 corresponds to the first CSI report, k = 0 corresponds to the second CSI report, and k = 2 corresponds to the third CSI report.

35. The apparatus according to claim 33, wherein the processor is further used to read the computer program in the memory and perform the following operations:

if the terminal reports support for L1-CLI measurement, determining the priority value according to a first formula; wherein the first formula is expressed as:

$$Pri_{iCSI}(y, k, c, s) = 3 \cdot N_{cells} \cdot M_s \cdot y + N_{cells} \cdot M_s \cdot k + M_s \cdot c + s;$$

wherein, $Pri_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; $k$, y respectively represent parameters;

wherein k = 0 corresponds to the first CSI report, k = 1 corresponds to the second CSI report, and k = 2 corresponds to the third CSI report; or

k = 1 corresponds to the first CSI report, k = 0 corresponds to the second CSI report, and k = 2 corresponds to the third CSI report.

36. The apparatus according to claim 31, wherein the processor is further used to read the computer program in the memory and perform one or more of the following operations:

determining the report content according to a type of L1-CLI measurement information comprised in the first CSI report; or

determining the report content according to a protocol specification.

37. The apparatus according to claim 36, wherein the processor is further used to read the computer program in the memory and perform the following operations:

if the L1-CLI measurement information carried in the first CSI report is a Received Signal Strength Indicator (RSSI), reporting N1 measurement resources with smallest interference and measurement results on the N1 measurement resources; or reporting a first measurement resource among the N1 measurement resources with the smallest interference, the first measurement result on the first measurement resource, and difference between the second measurement result and the first measurement result, wherein the first measurement result on the first measurement resource is a minimum value among the measurement results on the N1 measurement resources, and the second measurement result is a measurement result, excluding the first measurement result, among the measurement results on the N1 measurement resources; or

if the L1-CLI measurement information carried in the first CSI report is an RSSI, reporting N2 measurement resources and measurement results on the N2 measurement resources; or reporting the first measurement resource among the N2 measurement resources, the first measurement result on the first measurement resource, and difference between the second measurement result and the first measurement result, wherein the first measurement result on the first measurement resource is a minimum value among the measurement results on the N2 measurement resources, and the second measurement result is a measurement result, excluding the first measurement result, among the measurement results on the N2 measurement resources; or

if the L1-CLI measurement information carried in the first CSI report is Reference Signal Received Power (RSRP), reporting N3 measurement resources with largest interference and measurement results on the N3 measurement resources; or reporting a third measurement resource among the N3 measurement resources with the largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result, excluding the third measurement result, among the measurement results on the N3 measurement resources; or

if the L1-CLI measurement information carried in the first CSI report is Reference Signal Received Power (RSRP), reporting N4 measurement resources and measurement results on the N4 measurement resources; or reporting a third measurement resource among the N4 measurement resources, a third measurement result on the third measurement resource, and difference between the fourth measurement result and the third measurement result, wherein the third measurement result on the third measurement resource is a maximum value among the measurement results on the N4 measurement resources, and the fourth measurement result is a measurement result, excluding the third measurement result, among the measurement results on the N4 measurement resources;

wherein, N1, N2, N3, or N4 is an integer greater than 0.

38. The apparatus according to claim 36, wherein the processor is further used to read the computer program in the memory and perform the following operations:

reporting N5 measurement resources with a smallest interference and measurement results on the N5 measurement resources; or reporting a first measurement resource among the N5 measurement resources with smallest interference, a first measurement result on the first measurement resource, and difference between a second measurement result and the first measurement result, wherein the first measurement result on the first measurement resource is a minimum value among the measurement results on the N5 measurement resources, and the second measurement result is a measurement result, excluding the first measurement result, among the measurement results on the N5 measurement resources; or

reporting N6 measurement resources and measurement results on the N6 measurement resources; or reporting a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result, excluding the first measurement result, among the measurement results on the N6 measurement resources; or

reporting N7 measurement resources with largest interference and measurement results on the N7 measurement resources; or reporting a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources; or

reporting N8 measurement resources and measurement results on the N8 measurement resources; or reporting a third measurement resource among the N8 measurement resources, a third measurement result on the third measurement resource, and difference between the fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources;

wherein, N5, N6, N7, or N8 is an integer greater than 0.

39. The apparatus according to claim 31, wherein the processor is further used to read the computer program in the memory and perform the following operations:

if the first CSI report carries L1-CLI measurement information as an RSSI, determining a first calculation delay predefined based on each Subcarrier Spacing (SCS); or

if the first CSI report carries L1-CLI measurement information as an RSSI, determining the first calculation delay according to the CLI reporting capability of the terminal;

wherein, the first calculation delay is less than or equal to a calculation delay corresponding to L1-RSRP.

40. The apparatus according to claim 39, wherein the first calculation delay comprises a third calculation delay and a fourth calculation delay; and the processor is further used to read the computer program in the memory and perform the following operations:

determining a third calculation delay and a fourth calculation delay predefined based on each SCS;
wherein, different SCSs have corresponding third calculation delay and fourth calculation delay respectively;
the third calculation delay is a constant, or the third calculation delay is determined based on the fourth calculation delay, or the third calculation delay is determined based on the fourth calculation delay and the beamSwitchTiming reported by the terminal;
the fourth calculation delay is a constant.

41. The apparatus according to claim 39, wherein the first calculation delay comprises a third calculation delay and a fourth calculation delay;
the processor is further used to read the computer program in the memory and perform the following operations:

determining the fourth calculation delay according to the CLI reporting capability corresponding to each SCS; and
determining the third calculation delay based on the fourth calculation delay.

42. The apparatus according to claim 31, wherein the processor is further used to read the computer program in the memory and perform the following operations:

if the L1-CLI measurement information carried in the first CSI report is RSRP: determining a predefined second calculation delay; or
if the L1-CLI measurement information carried in the first CSI report is RSRP: determining the second calculation delay according to the beamReportTiming reported by the terminal;
wherein, the second calculation delay is less than or equal to the calculation delay corresponding to L1-RSRP.

43. The apparatus according to claim 42, wherein the second calculation delay comprises a fifth calculation delay and a sixth calculation delay; and the processor is further used to read the computer program in the memory and perform the following operations:

determining a fifth calculation delay and a sixth calculation delay corresponding to each predefined SCS;
wherein, the fifth calculation delay is a constant, or the fifth calculation delay is determined based on the sixth calculation delay; the sixth calculation delay is a constant.

44. The apparatus according to claim 42, wherein the second calculation delay comprises a fifth calculation delay and a sixth calculation delay; and the processor is further used to read the computer program in the memory and perform the following operations:

when $\mu = 0$ or $\mu = 1$, the fifth calculation delay is a constant; or when $\mu = 2$ or $\mu = 3$ or $\mu = 5$ or $\mu = 6$, determining the fifth calculation delay according to the beamReportTiming reported by the terminal; and
determining the sixth calculation delay according to the beamReportTiming reported by the terminal;
wherein, $\mu$ represents Subcarrier Spacing (SCS).

45. The apparatus according to claim 44, wherein the processor is further used to read the computer program in the memory and perform the following operations:

determining the fifth calculation delay based on the beamReportTiming and the first capability reported by the terminal;
wherein, the first capability is used to indicate a time interval between a moment when the terminal receives a DCI for triggering aperiodic L1-CLI reporting and a sending moment of an aperiodic reference signal.

46. An information processing apparatus, applied to a network device, comprising:

a memory, a transceiver, and a processor;
the memory is used to store a computer program;
the transceiver is used to send and receive data under the control of the processor;
the processor is used to read the computer program in the memory and perform the following operations:

determining information of a first CSI report, wherein the first CSI report carries measurement information of L1-CLI;
processing according to the information;

the information comprises one or more of following pieces of information:

a priority value;
report content;
a calculation delay requirement.

**47.** The apparatus according to claim 46, wherein,

a priority value of the first CSI report is less than a priority value of the second CSI report; or
a priority value of the first CSI report is less than a priority value of the third CSI report and greater than a priority value of the second CSI report;
wherein the second CSI report carries L1-RSRP or L1-SINR, and the third CSI report does not carry the measurement information of L1-CLI, L1-RSRP, or L1-SINR.

**48.** The apparatus according to claim 46 or 47, wherein the processor is further used to read the computer program in the memory and perform the following operations:

determining the priority value according to L1-CLI configuration information of the terminal; or
determining the priority value according to the L1-CLI measurement capability reported by the terminal.

**49.** The apparatus according to claim 48, wherein the processor is further used to read the computer program in the memory and perform the following operations:

if the L1-CLI configuration information is sent to the terminal via a DCI or the L1-CLI configuration information is configured for the terminal via higher-layer signaling, determining the priority value according to a first formula; wherein the first formula is expressed as:

$$\mathrm{Pri}_{\mathrm{iCSI}}(y, k, c, s) = 3 \cdot \mathrm{N}_{\mathrm{cells}} \cdot \mathrm{M}_{\mathrm{s}} \cdot y + \mathrm{N}_{\mathrm{cells}} \cdot \mathrm{M}_{\mathrm{s}} \cdot k + \mathrm{M}_{\mathrm{s}} \cdot c + s;$$

wherein, $\mathrm{Pri}_{\mathrm{iCSI}}(y, k, c, s)$ represents a priority value; c represents a serving cell index; s represents a report configuration ID (reportConfigID); $\mathrm{N}_{\mathrm{cells}}$ represents a value of a higher-layer configuration parameter maxNrof-ServingCells; $\mathrm{M}_{\mathrm{s}}$ represents a value of a higher-layer parameter maxNrofCSI-ReportConfigurations; $k$ and $y$ respectively represent parameters;
wherein k = 0 corresponds to the first CSI report, k = 1 corresponds to the second CSI report, and k = 2 corresponds to the third CSI report; or
k = 1 corresponds to the first CSI report, k = 0 corresponds to the second CSI report, and k = 2 corresponds to the third CSI report.

**50.** The apparatus according to claim 48, wherein the processor is further used to read the computer program in the memory and perform the following operations:

if the terminal reports support for L1-CLI measurement, determining the priority value according to a first formula; wherein the first formula is expressed as:

$$\mathrm{Pri}_{\mathrm{iCSI}}(y, k, c, s) = 3 \cdot \mathrm{N}_{\mathrm{cells}} \cdot \mathrm{M}_{\mathrm{s}} \cdot y + \mathrm{N}_{\mathrm{cells}} \cdot \mathrm{M}_{\mathrm{s}} \cdot k + \mathrm{M}_{\mathrm{s}} \cdot c + s;$$

wherein, $\mathrm{Pri}_{\mathrm{iCSI}}(y, k, c, s)$ represents a priority value; c represents a serving cell index; s represents a report configuration ID (reportConfigID); $\mathrm{N}_{\mathrm{cells}}$ represents a value of a higher-layer configuration parameter maxNrof-ServingCells; $\mathrm{M}_{\mathrm{s}}$ represents a value of a higher-layer parameter maxNrofCSI-ReportConfigurations; $k$ , $y$ respectively represent parameters;
wherein k = 0 corresponds to the first CSI report, k = 1 corresponds to the second CSI report, and k = 2 corresponds to the third CSI report; or
k = 1 corresponds to the first CSI report, k = 0 corresponds to the second CSI report, and k = 2 corresponds to the third CSI report.

**51.** The apparatus according to claim 46, wherein the processor is further used to read the computer program in the memory and perform the following operations:

determining the report content according to a type of L1-CLI measurement information comprised in the first CSI report; or

determining the report content according to a protocol specification.

52. The apparatus according to claim 51, wherein the processor is further used to read the computer program in the memory and perform the following operations:

if the L1-CLI measurement information carried in the first CSI report is an RSSI, determining the report content to be N1 measurement resources with smallest interference and measurement results on the N1 measurement resources; or a first measurement resource among the N1 measurement resources with smallest interference, a first measurement result on the first measurement resource, and difference between the second measurement result and the first measurement result, wherein the first measurement result on the first measurement resource is a minimum value among the measurement results on the N1 measurement resources, and the second measurement result is a measurement result excluding the first measurement result among the measurement results on the N1 measurement resources; or N2 measurement resources and measurement results on the N2 measurement resources; or a first measurement resource among the N2 measurement resources, a first measurement result on the first measurement resource, and difference between the second measurement result and the first measurement result, wherein the first measurement result on the first measurement resource is a minimum value among the measurement results on the N2 measurement resources, and the second measurement result is a measurement result excluding the first measurement result among the measurement results on the N2 measurement resources; or

if the L1-CLI measurement information carried in the first CSI report is RSRP: determining the report content to be: N3 measurement resources with largest interference and measurement results on the N3 measurement resources; or a third measurement resource among the N3 measurement resources with largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result excluding the third measurement result among the measurement results on the N3 measurement resources; or N4 measurement resources and measurement results on the N4 measurement resources; or a third measurement resource among the N4 measurement resources, a third measurement result on the third measurement resource, and difference between the fourth measurement result and the third measurement result, wherein the third measurement result on the third measurement resource is a maximum value among measurement results on the N4 measurement resources, and the fourth measurement result is a measurement result excluding the third measurement result among the measurement results on the N4 measurement resources;

wherein, N1, N2, N3, or N4 is an integer greater than 0.

53. The apparatus according to claim 51, wherein the processor is further used to read the computer program in the memory and perform the following operations:

determining the report content to be: N5 measurement resources with smallest interference and measurement results on the N5 measurement resources; or a first measurement resource among the N5 measurement resources with smallest interference, a first measurement result on the first measurement resource, and difference between the second measurement result and the first measurement result, wherein the first measurement result on the first measurement resource is a minimum value among the measurement results on the N5 measurement resources, and the second measurement result is a measurement result excluding the first measurement result among the measurement results on the N5 measurement resources; or

determining the report content to be: N6 measurement resources and measurement results on the N6 measurement resources; or a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result excluding the first measurement result among the measurement results on the N6 measurement resources; or

determining the report content to be: N7 measurement resources with largest interference and measurement results on the N7 measurement resources; or a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources; or

determining the report content to be: N8 measurement resources and measurement results on the N8 measurement resources; or a third measurement resource among the N8 measurement resources, a third measurement result on the third measurement resource, and difference between a fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources;

wherein, N5, N6, N7, or N8 is an integer greater than 0.

54. The apparatus according to claim 46, wherein the processor is further used to read the computer program in the memory and perform the following operations:

if the first CSI report carries L1-CLI measurement information as an RSSI: determining a first calculation delay predefined based on each SCS; or
if the first CSI report carries L1-CLI measurement information as an RSSI: determining the first calculation delay according to the CLI reporting capability of the terminal;
wherein, the first calculation delay is less than or equal to the calculation delay corresponding to L1-RSRP.

55. The apparatus according to claim 54, wherein the first calculation delay includes a third calculation delay and a fourth calculation delay; and the processor is further used to read the computer program in the memory and perform the following operations:

determining a third calculation delay and a fourth calculation delay predefined based on each SCS;
wherein, different SCSs have corresponding third calculation delay and fourth calculation delay respectively;
the third calculation delay is a constant, or the third calculation delay is determined based on the fourth calculation delay, or the third calculation delay is determined based on the fourth calculation delay and the beamSwitchTiming reported by the terminal;
the fourth calculation delay is a constant.

56. The apparatus according to claim 54, wherein the first calculation delay includes a third calculation delay and a fourth calculation delay; and the processor is further used to read the computer program in the memory and perform the following operations:

determining the fourth calculation delay according to the CLI reporting capability corresponding to each SCS; and
determining the third calculation delay based on the fourth calculation delay.

57. The apparatus according to claim 46, wherein the processor is further used to read the computer program in the memory and perform the following operations:

if the L1-CLI measurement information carried in the first CSI report is RSRP: determining a predefined second calculation delay; or
if the L1-CLI measurement information carried in the first CSI report is RSRP: determining the second calculation delay according to the beamReportTiming reported by the terminal;
wherein, the second calculation delay is less than or equal to the calculation delay corresponding to L1-RSRP.

58. The apparatus according to claim 57, wherein the second calculation delay comprises a fifth calculation delay and a sixth calculation delay; and the processor is further used to read the computer program in the memory and perform the following operations:

determining a fifth calculation delay and a sixth calculation delay corresponding to each predefined SCS;
wherein, the fifth calculation delay is a constant, or the fifth calculation delay is determined based on the sixth calculation delay;
the sixth calculation delay is a constant.

59. The apparatus according to claim 57, wherein the second calculation delay comprises a fifth calculation delay and a sixth calculation delay; and the processor is further used to read the computer program in the memory and perform the following operations:

when μ = 0 or μ = 1, the fifth calculation delay is a constant; or when μ = 2 or μ = 3 or μ = 5 or μ = 6, determining the fifth calculation delay according to the beamReportTiming reported by the terminal; and
determining the sixth calculation delay according to the beamReportTiming reported by the terminal;
wherein, μ represents Subcarrier Spacing (SCS).

60. The apparatus according to claim 59, wherein the processor is further used to read the computer program in the memory and perform the following operations:

determining the fifth calculation delay based on the beamReportTiming and the first capability reported by the terminal;
wherein, the first capability is used to indicate a time interval between a moment when the terminal receives the DCI for triggering aperiodic L1-CLI reporting and a sending moment of an aperiodic reference signal.

61. An information processing apparatus, applied to a terminal, comprising:
a first determining unit, used to determine one or more of following pieces of information of a first Channel State Information (CSI) report:

a priority value;
report content;
a calculation delay requirement;
wherein the first CSI report carries measurement information of Layer 1 Cross-Link Interference (L1-CLI).

62. The information processing apparatus according to claim 61, wherein,

a priority value of the first CSI report is less than a priority value of the second CSI report; or
a priority value of the first CSI report is less than a priority value of the third CSI report and greater than a priority value of the second CSI report;
wherein the second CSI report carries Layer-1 Reference Signal Received Power (L1-RSRP) or Layer-1 Signal to Noise and Interference Ratio (L1-SINR), and the third CSI report does not carry the measurement information of L1-CLI, L1-RSRP, or L1-SINR.

63. The information processing apparatus according to claim 61 or 62, wherein the apparatus may further comprise a second determining unit, used to:

determine the priority value according to L1-CLI configuration information of a network device; or
determine the priority value according to L1-CLI measurement capability reported by the terminal.

64. The information processing apparatus according to claim 63, wherein the second determining unit is further used to:

if the L1-CLI configuration information configured by the network device through Downlink Control Information (DCI) is received, or the L1-CLI configuration information configured by the network device through higher-layer signaling is obtained, determine the priority value according to a first formula;
wherein the first formula is expressed as:

$$\text{Pri}_{iCSI}(y, k, c, s) = 3 \cdot N_{cells} \cdot M_s \cdot y + N_{cells} \cdot M_s \cdot k + M_s \cdot c + s;$$

wherein, $\text{Pri}_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; *k* and *y* respectively represent parameters;
wherein k = 0 corresponds to the first CSI report, k = 1 corresponds to the second CSI report, and k = 2 corresponds to the third CSI report; or
k = 1 corresponds to the first CSI report, k = 0 corresponds to the second CSI report, and k = 2 corresponds to the third CSI report.

65. The information processing apparatus according to claim 63, wherein the second determining unit is further used to:

if the terminal reports support for L1-CLI measurement, determine the priority value according to a first formula; wherein the first formula is expressed as:

$$\mathrm{Pri}_{iCSI}(y, k, c, s) = 3 \cdot N_{cells} \cdot M_s \cdot y + N_{cells} \cdot M_s \cdot k + M_s \cdot c + s;$$

wherein, $\mathrm{Pri}_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; $k$, $y$ respectively represent parameters;

wherein k = 0 corresponds to the first CSI report, k = 1 corresponds to the second CSI report, and k = 2 corresponds to the third CSI report; or

k = 1 corresponds to the first CSI report, k = 0 corresponds to the second CSI report, and k = 2 corresponds to the third CSI report.

66. The information processing apparatus according to claim 61, wherein the apparatus may further comprise a third determining unit, used to:

determine the report content according to a type of L1-CLI measurement information comprised in the first CSI report; or

determine the report content according to a protocol specification.

67. The information processing apparatus according to claim 66, wherein,

if the L1-CLI measurement information carried in the first CSI report is a Received Signal Strength Indicator (RSSI), N1 measurement resources with smallest interference and measurement results on the N1 measurement resources are reported; or a first measurement resource among the N1 measurement resources with the smallest interference, the first measurement result on the first measurement resource, and difference between the second measurement result and the first measurement result are reported, wherein the first measurement result on the first measurement resource is a minimum value among the measurement results on the N1 measurement resources, and the second measurement result is a measurement result, excluding the first measurement result, among the measurement results on the N1 measurement resources; or

if the L1-CLI measurement information carried in the first CSI report is an RSSI, N2 measurement resources and measurement results on the N2 measurement resources are reported; or the first measurement resource among the N2 measurement resources, the first measurement result on the first measurement resource, and difference between the second measurement result and the first measurement result are reported, wherein the first measurement result on the first measurement resource is a minimum value among the measurement results on the N2 measurement resources, and the second measurement result is a measurement result, excluding the first measurement result, among the measurement results on the N2 measurement resources; or

if the L1-CLI measurement information carried in the first CSI report is Reference Signal Received Power (RSRP), N3 measurement resources with largest interference and measurement results on the N3 measurement resources are reported; or a third measurement resource among the N3 measurement resources with the largest interference, a third measurement result on the third measurement resource, and difference between a fourth measurement result and the third measurement result are reported, wherein the third measurement result on the third measurement resource is a maximum value among the measurement results on the N3 measurement resources, and the fourth measurement result is a measurement result, excluding the third measurement result, among the measurement results on the N3 measurement resources; or

if the L1-CLI measurement information carried in the first CSI report is Reference Signal Received Power (RSRP), N4 measurement resources and measurement results on the N4 measurement resources are reported; or a third measurement resource among the N4 measurement resources, a third measurement result on the third measurement resource, and difference between the fourth measurement result and the third measurement result are reported, wherein the third measurement result on the third measurement resource is a maximum value among the measurement results on the N4 measurement resources, and the fourth measurement result is a measurement result, excluding the third measurement result, among the measurement results on the N4 measurement resources;

wherein, N1, N2, N3, or N4 is an integer greater than 0.

**68.** The information processing apparatus according to claim 66, wherein the third determining unit is further used to:

report N5 measurement resources with a smallest interference and measurement results on the N5 measurement resources; or report a first measurement resource among the N5 measurement resources with smallest interference, a first measurement result on the first measurement resource, and difference between a second measurement result and the first measurement result, wherein the first measurement result on the first measurement resource is a minimum value among the measurement results on the N5 measurement resources, and the second measurement result is a measurement result, excluding the first measurement result, among the measurement results on the N5 measurement resources; or

report N6 measurement resources and measurement results on the N6 measurement resources; or reportg a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result, excluding the first measurement result, among the measurement results on the N6 measurement resources; or

report N7 measurement resources with largest interference and measurement results on the N7 measurement resources; or report a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources; or

report N8 measurement resources and measurement results on the N8 measurement resources; or report a third measurement resource among the N8 measurement resources, a third measurement result on the third measurement resource, and difference between the fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources;

wherein, N5, N6, N7, or N8 is an integer greater than 0.

**69.** The information processing apparatus according to claim 61, wherein the apparatus may further comprise a fourth determining unit, used to:

if the first CSI report carries L1-CLI measurement information as an RSSI, determine a first calculation delay predefined based on each Subcarrier Spacing (SCS); or
if the first CSI report carries L1-CLI measurement information as an RSSI, determine the first calculation delay according to the CLI reporting capability of the terminal;
wherein, the first calculation delay is less than or equal to a calculation delay corresponding to L1-RSRP.

**70.** The information processing apparatus according to claim 69, wherein the first calculation delay comprises a third calculation delay and a fourth calculation delay; and the fourth determining unit is further used to:

determine a third calculation delay and a fourth calculation delay predefined based on each SCS;
wherein, different SCSs have corresponding third calculation delay and fourth calculation delay respectively;
the third calculation delay is a constant, or the third calculation delay is determined based on the fourth calculation delay, or the third calculation delay is determined based on the fourth calculation delay and the beamSwitchTiming reported by the terminal;
the fourth calculation delay is a constant.

**71.** The information processing apparatus according to claim 69, wherein the first calculation delay comprises a third calculation delay and a fourth calculation delay; and the fourth determining unit is further used to:

determine the fourth calculation delay according to the CLI reporting capability corresponding to each SCS; and
determine the third calculation delay based on the fourth calculation delay.

**72.** The information processing apparatus according to claim 61, wherein the fourth determining unit is further used to:

if the L1-CLI measurement information carried in the first CSI report is RSRP: determine a predefined second calculation delay; or

if the L1-CLI measurement information carried in the first CSI report is RSRP: determine the second calculation delay according to the beamReportTiming reported by the terminal;

wherein, the second calculation delay is less than or equal to the calculation delay corresponding to L1-RSRP.

73. The information processing apparatus according to claim 72, wherein the second calculation delay comprises a fifth calculation delay and a sixth calculation delay; and the fourth determining unit is further used to:

determine a fifth calculation delay and a sixth calculation delay corresponding to each predefined SCS;

wherein, the fifth calculation delay is a constant, or the fifth calculation delay is determined based on the sixth calculation delay; the sixth calculation delay is a constant.

74. The information processing apparatus according to claim 72, wherein t the second calculation delay comprises a fifth calculation delay and a sixth calculation delay; and the fourth determining unit is further used to:

when $\mu = 0$ or $\mu = 1$, the fifth calculation delay is a constant; or when $\mu = 2$ or $\mu = 3$ or $\mu = 5$ or $\mu = 6$, determine the fifth calculation delay according to the beamReportTiming reported by the terminal; and

determine the sixth calculation delay according to the beamReportTiming reported by the terminal;

wherein, $\mu$ represents Subcarrier Spacing (SCS).

75. The information processing apparatus according to claim 74, wherein the fourth determining unit is further used to:

determine the fifth calculation delay based on the beamReportTiming and the first capability reported by the terminal;

wherein, the first capability is used to indicate a time interval between a moment when the terminal receives a DCI for triggering aperiodic L1-CLI reporting and a sending moment of an aperiodic reference signal.

76. An information processing apparatus, applied to a network device, comprising:

a first determining unit, used to determine information of a first CSI report, wherein the first CSI report carries measurement information of L1-CLI; and

a first processing unit, used to process according to the information;

wherein, the information comprises one or more of following pieces of information:

a priority value;
report content;
a calculation delay requirement.

77. The information processing apparatus according to claim 76, wherein,

a priority value of the first CSI report is less than a priority value of the second CSI report; or

a priority value of the first CSI report is less than a priority value of the third CSI report and greater than a priority value of the second CSI report;

wherein the second CSI report carries L1-RSRP or L1-SINR, and the third CSI report does not carry the measurement information of L1-CLI, L1-RSRP, or L1-SINR.

78. The information processing apparatus according to claim 76 or 77, wherein the apparatus may further comprise a second determining unit, used to:

determine the priority value according to L1-CLI configuration information of the terminal; or

determine the priority value according to the L1-CLI measurement capability reported by the terminal.

79. The information processing apparatus according to claim 78, wherein the second determining unit is further used to:

if the L1-CLI configuration information is sent to the terminal via a DCI or the L1-CLI configuration information is configured for the terminal via higher-layer signaling, determine the priority value according to a first formula;

wherein the first formula is expressed as:

$$Pri_{iCSI}(y, k, c, s) = 3 \cdot N_{cells} \cdot M_s \cdot y + N_{cells} \cdot M_s \cdot k + M_s \cdot c + s;$$

wherein, $Pri_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; *k* and *y* respectively represent parameters;

wherein k = 0 corresponds to the first CSI report, k = 1 corresponds to the second CSI report, and k = 2 corresponds to the third CSI report; or

k = 1 corresponds to the first CSI report, k = 0 corresponds to the second CSI report, and k = 2 corresponds to the third CSI report.

80. The information processing apparatus according to claim 78, wherein the second determining unit is further used to:

if the terminal reports support for L1-CLI measurement, determine the priority value according to a first formula; wherein the first formula is expressed as:

$$Pri_{iCSI}(y, k, c, s) = 3 \cdot N_{cells} \cdot M_s \cdot y + N_{cells} \cdot M_s \cdot k + M_s \cdot c + s;$$

wherein, $Pri_{iCSI}(y, k, c, s)$ represents a priority value; c represents a serving cell index; s represents a report configuration ID (reportConfigID); $N_{cells}$ represents a value of a higher-layer configuration parameter maxNrof-ServingCells; $M_s$ represents a value of a higher-layer parameter maxNrofCSI-ReportConfigurations; *k* , *y* respectively represent parameters;

wherein k = 0 corresponds to the first CSI report, k = 1 corresponds to the second CSI report, and k = 2 corresponds to the third CSI report; or

k = 1 corresponds to the first CSI report, k = 0 corresponds to the second CSI report, and k = 2 corresponds to the third CSI report.

81. The information processing apparatus according to claim 76, wherein the apparatus may further comprise a third determining unit, used to:

determine the report content according to a type of L1-CLI measurement information comprised in the first CSI report; or

determine the report content according to a protocol specification.

82. The information processing apparatus according to claim 81, wherein the third determining unit is further used to:

if the L1-CLI measurement information carried in the first CSI report is an RSSI, determine the report content to be N1 measurement resources with smallest interference and measurement results on the N1 measurement resources; or a first measurement resource among the N1 measurement resources with smallest interference, a first measurement result on the first measurement resource, and difference between the second measurement result and the first measurement result, wherein the first measurement result on the first measurement resource is a minimum value among the measurement results on the N1 measurement resources, and the second measurement result is a measurement result excluding the first measurement result among the measurement results on the N1 measurement resources; or N2 measurement resources and measurement results on the N2 measurement resources; or a first measurement resource among the N2 measurement resources, a first measurement result on the first measurement resource, and difference between the second measurement result and the first measurement result, wherein the first measurement result on the first measurement resource is a minimum value among the measurement results on the N2 measurement resources, and the second measurement result is a measurement result excluding the first measurement result among the measurement results on the N2 measurement resources; or

if the L1-CLI measurement information carried in the first CSI report is RSRP: determine the report content to be: N3 measurement resources with largest interference and measurement results on the N3 measurement resources; or a third measurement resource among the N3 measurement resources with largest interference, a third measurement result on the third measurement resource, and difference between a fourth measurement result and the third measurement result, wherein the third measurement result on the third measurement resource is a maximum value among the measurement results on the N3 measurement resources, and the fourth measurement result is a measurement result excluding the third measurement result among the measurement results on the N3 measurement resources; or N4 measurement resources and measurement results on the N4 measurement resources; or a third measurement resource among the N4 measurement resources, a third measurement result on the third measurement resource, and difference between the fourth measurement result and the third measurement result, wherein the third measurement result on the third measurement resource is a maximum value among measurement results on the N4 measurement resources, and the fourth measurement result is a measurement result excluding the third measurement result among the measurement results on the N4 measurement resources;

wherein, N1, N2, N3, or N4 is an integer greater than 0.

83. The information processing apparatus according to claim 81, wherein the third determining unit is further used to:

determine the report content to be: N5 measurement resources with smallest interference and measurement results on the N5 measurement resources; or a first measurement resource among the N5 measurement resources with smallest interference, a first measurement result on the first measurement resource, and difference between the second measurement result and the first measurement result, wherein the first measurement result on the first measurement resource is a minimum value among the measurement results on the N5 measurement resources, and the second measurement result is a measurement result excluding the first measurement result among the measurement results on the N5 measurement resources; or

determine the report content to be: N6 measurement resources and measurement results on the N6 measurement resources; or a first measurement resource among the N6 measurement resources, a first measurement result on the first measurement resource, and difference between a second measurement result and the first measurement result, wherein the first measurement result on the first measurement resource is a minimum value among the measurement results on the N6 measurement resources, and the second measurement result is a measurement result excluding the first measurement result among the measurement results on the N6 measurement resources; or

determine the report content to be: N7 measurement resources with largest interference and measurement results on the N7 measurement resources; or a third measurement resource among the N7 measurement resources with largest interference, a third measurement result on the third measurement resource, and difference between a fourth measurement result and the third measurement result, wherein the third measurement result on the third measurement resource is a maximum value among the measurement results on the N7 measurement resources, and the fourth measurement result is a measurement result excluding the third measurement result among the measurement results on the N7 measurement resources); or

determine the report content to be: N8 measurement resources and measurement results on the N8 measurement resources; or a third measurement resource among the N8 measurement resources, a third measurement result on the third measurement resource, and difference between a fourth measurement result and the third measurement result, wherein the third measurement result on the third measurement resource is a maximum value among the measurement results on the N8 measurement resources, and the fourth measurement result is a measurement result excluding the third measurement result among the measurement results on the N8 measurement resources;

wherein, N5, N6, N7, or N8 is an integer greater than 0.

84. The information processing apparatus according to claim 76, wherein the apparatus further comprises a fourth determining unit, used to:

if the first CSI report carries L1-CLI measurement information as an RSSI: determine a first calculation delay predefined based on each SCS; or

if the first CSI report carries L1-CLI measurement information as an RSSI: determine the first calculation delay according to the CLI reporting capability of the terminal;

wherein, the first calculation delay is less than or equal to the calculation delay corresponding to L1-RSRP.

85. The information processing apparatus according to claim 84, wherein the first calculation delay comprises a third calculation delay and a fourth calculation delay; and the fourth determining unit is further used to:

determine a third calculation delay and a fourth calculation delay predefined based on each SCS;

wherein, different SCSs have corresponding third calculation delay and fourth calculation delay respectively; the third calculation delay is a constant, or the third calculation delay is determined based on the fourth calculation delay, or the third calculation delay is determined based on the fourth calculation delay and the beamSwitchTiming reported by the terminal;

the fourth calculation delay is a constant.

86. The information processing apparatus according to claim 84, wherein the first calculation delay comprises a third calculation delay and a fourth calculation delay; and the fourth determining unit is further used to:

determine the fourth calculation delay according to the CLI reporting capability corresponding to each SCS; and determine the third calculation delay based on the fourth calculation delay.

87. The information processing apparatus according to claim 76, wherein the apparatus further comprises a fifth determining unit, used to:

if the L1-CLI measurement information carried in the first CSI report is RSRP: determine a predefined second calculation delay; or
if the L1-CLI measurement information carried in the first CSI report is RSRP: determine the second calculation delay according to the beamReportTiming reported by the terminal;
wherein, the second calculation delay is less than or equal to the calculation delay corresponding to L1-RSRP.

88. The information processing apparatus according to claim 87, wherein the second calculation delay comprises a fifth calculation delay and a sixth calculation delay; and the fifth determining unit is used to:

determine a fifth calculation delay and a sixth calculation delay corresponding to each predefined SCS;
wherein, the fifth calculation delay is a constant, or the fifth calculation delay is determined based on the sixth calculation delay;
the sixth calculation delay is a constant.

89. The information processing apparatus according to claim 87, wherein the second calculation delay comprises a fifth calculation delay and a sixth calculation delay; and the fifth determining unit is used to:

when $\mu = 0$ or $\mu = 1$, the fifth calculation delay is a constant; or when $\mu = 2$ or $\mu = 3$ or $\mu = 5$ or $\mu = 6$, determine the fifth calculation delay according to the beamReportTiming reported by the terminal; and
determine the sixth calculation delay according to the beamReportTiming reported by the terminal;
wherein, $\mu$ represents Subcarrier Spacing (SCS).

90. The information processing apparatus according to claim 89, wherein the fifth determining unit is further used to:

determine the fifth calculation delay based on the beamReportTiming and the first capability reported by the terminal;
wherein, the first capability is used to indicate a time interval between a moment when the terminal receives the DCI for triggering aperiodic L1-CLI reporting and a sending moment of an aperiodic reference signal.

91. A processor-readable storage medium, wherein the processor-readable storage medium stores a computer program, and the computer program is used to cause a processor to execute the method according to any one of claims 1 to 30.

determining one or more of following information of a first CSI report: a priority value; report content; a calculation delay requirement

/ 101

**FIG.1**

Determining information of a first CSI report, where the first CSI report carries measurement information of L1-CLI

/ 201

Processing according to the information

/ 202

**FIG.2**

300

Processor

320

Memory

Bus interface

310

Transceiver

**FIG.3**

**FIG.4**

**FIG. 5**

**FIG. 6**

## INTERNATIONAL SEARCH REPORT

| International application No. |
| --- |
| **PCT/CN2024/084631** |

**A.    CLASSIFICATION OF SUBJECT MATTER**

H04W24/10(2009.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

WPABSC; VEN; CNTXT; CNKI; ENTXT; 3GPP: CSI, L1, 层1, CLI, 测量, 配置, 优先级, CSI, 时延, 间隔, 时间, RSRP, SINR, RSSI, layer 1, measur+, config+, priorit+, delay, interval, tim+

**C.    DOCUMENTS CONSIDERED TO BE RELEVANT**

| Category* | Citation of document, with indication, where appropriate, of the relevant passages | Relevant to claim No. |
| --- | --- | --- |
| X | US 2023055304 A1 (SAMSUNG ELECTRONICS CO., LTD.) 23 February 2023 (2023-02-23)<br>description, paragraphs 394-482 and 548-568 | 1-3, 6, 16-18, 21, 31-33, 36, 46-48, 51, 61-63, 66, 76-78, 81, 91 |
| X | WO 2022036641 A1 (QUALCOMM INC.) 24 February 2022 (2022-02-24)<br>description, paragraphs 84-100 | 1-3, 6, 16-18, 21, 31-33, 36, 46-48, 51, 61-63, 66, 76-78, 81, 91 |
| A | US 2021328692 A1 (QUALCOMM INC.) 21 October 2021 (2021-10-21)<br>entire document | 1-91 |
| A | WO 2023273869 A1 (BEIJING UNISOC COMMUNICATIONS TECHNOLOGY CO., LTD.) 05 January 2023 (2023-01-05)<br>entire document | 1-91 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 June 2024** | **25 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084631**

| Patent document cited in search report | | | Publication date (day/month/year) | Patent family member(s) | | | Publication date (day/month/year) |
|---|---|---|---|---|---|---|---|
| US | 2023055304 | A1 | 23 February 2023 | EP | 4367812 | A1 | 15 May 2024 |
| | | | | WO | 2023014064 | A1 | 09 February 2023 |
| WO | 2022036641 | A1 | 24 February 2022 | | None | | |
| US | 2021328692 | A1 | 21 October 2021 | EP | 4136773 | A1 | 22 February 2023 |
| | | | | WO | 2021211766 | A1 | 21 October 2021 |
| | | | | US | 11736212 | B2 | 22 August 2023 |
| WO | 2023273869 | A1 | 05 January 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310367790